# EUROPEAN PATENT SPECIFICATION

(11) **EP 4 324 259 B1**
(45) Date of publication and mention of the grant of the patent: **05.11.2025**
(21) Application number: 22795021.9
(22) Date of filing: 29.04.2022
(51) Int. Cl.: H04L 5/00, H04W 56/00

(54) **SYNCHRONIZATION SIGNAL BLOCK PERIODICITY CHANGES**
ÄNDERUNGEN DER BLOCKPERIODIZITÄT EINES SYNCHRONISATIONSSIGNALS
CHANGEMENTS DE PÉRIODICITÉ DE BLOCS DE SIGNAUX DE SYNCHRONISATION

(30) Priority: 30.04.2021 US 202163182294 P; 28.04.2022 US 202217732123
(43) Date of publication of application: 21.02.2024
(73) Proprietor: Huawei Technologies Co., Ltd., Longgang Shenzhen, Guangdong 518129 (CN)
(72) Inventor: ZARIFI, Keyvan, Ottawa, Ontario K2S 0H7 (CA)
(74) Representative: Maiwald GmbH
(86) International application number: PCT/CN2022/090318
(87) International publication number: WO 2022/228552

(56) References cited:
- WO-A1-2019/066575
- WO-A1-2020/131244
- WO-A1-2020/164617
- CN-A- 111 147 201
- US-A1- 2020 337 002
- US-A1- 2021 092 696
- US-B2- 11 664 944
- INTERDIGITAL INC.: "Discussion on Procedures for Initial Access and Mobility in NR-U", 3GPP DRAFT; R1-1813221, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Spokane, USA; 20181112 - 20181116, 11 November 2018 (2018-11-11), Mobile Competence Centre ; 650, route des Lucioles ; F-06921 Sophia-Antipolis Cedex ; France , XP051555224
- VIVO: "Discussion on initial access for NR-U", 3GPP DRAFT; R1-1810383 DISCUSSION ON INITIAL ACCESS FOR NR-U, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Chengdu, China; 20181008 - 20181012, 29 September 2018 (2018-09-29), Mobile Competence Centre ; 650, route des Lucioles ; F-06921 Sophia-Antipolis Cedex ; France , XP051517792
- SAMSUNG: "On Synchronization Mechanisms for NR Sidelink", 3GPP DRAFT; R1-2000619, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200224 - 20200306, 14 February 2020 (2020-02-14), Mobile Competence Centre ; 650, route des Lucioles ; F-06921 Sophia-Antipolis Cedex ; France , XP051852963

## Description

The present application claims the priorities of United States Provisional Patent Application Serial No. 63/182,294 entitled "SYNCHRONIZATION SIGNAL BLOCK PERIODICITY CHANGES", filed on April 30, 2021, and United States Patent Application No. 17/732,123 entitled "SYNCHRONIZATION SIGNAL BLOCK PERIODICITY CHANGES" filed April 28, 2022.

### TECHNICAL FIELD

The present disclosure relates, generally, to wireless communications, in particular embodiments, synchronization signal block (SSB) processing and transmission.

### BACKGROUND

WO2019/066575A1 relates to a wireless communication system and, more specifically, provides a method and an apparatus therefor, the method comprising the steps of: detecting one or more SSBs in a cell; acquiring downlink synchronization on the basis of the one or more SSBs; and transmitting a RACH preamble by using a PRACH resource corresponding to the best SSB among the one or more SSBs, wherein the downlink synchronization is acquired on the basis of first SSB index information in each of the SSBs, and the PRACH resource is determined on the basis of second SSB index information configured for the best SSB by the cell.

CN111147201A relates to an electronic device, a wireless communication method and a computer readable medium. It is described that the electronic device for line communication comprises a processing circuit. It is described that the processing circuit is configured to: determine a duration of a transmission window of the discovery reference signal based on a target number of candidate positions of a synchronization signal block of the discovery reference signal and a subcarrier interval; and control sending of the discovery reference signal based on the determined duration.

In fifth generation, "5G," cellular communication systems, when performing a search for a cell, user equipment (UE) decodes a primary synchronization signal (PSS) and a secondary synchronization signal (SSS) to determine timing information and a physical cell identifier (ID). In 5G New Radio (NR), the PSS, the SSS and the physical broadcast channel (PBCH) are transmitted in one block called a synchronization signal/physical broadcast channel block (SS/PBCH block, or, in short, SSB). Each one of a plurality of SSB candidates are typically transmitted in four orthogonal frequency division multiple access (OFDM) symbols across up to 240 subcarriers. Currently, the plurality of SSB candidates may be transmitted in a pre-defined burst (an "SSB set") across the time domain within half of a radio frame. Each SSB set includes SSB candidates with indices
*i =* 0,...,*L̅ₘₐₓ* -1. *L̅ₘₐₓ* can take different values. For instance, *L̅ₘₐₓ* can be 4, 8, 10, or 20 in frequency range 1 (FR1) depending on whether the frequency is less than or equal to 3GHz or more than 3GHz and whether the operation is with shared spectrum channel access or without shared spectrum channel access. In turn, currently, *L̅ₘₐₓ* = 64 for frequency range 2 (FR2) where FR1 and FR2 are described as follows. It is not necessary that all *L̅ₘₐₓ* SSB candidates be actually transmitted. In fact, the maximum number of actually transmitted SSBs per SSB set is *Lₘₐₓ* where, for operation without shared spectrum channel access, *Lₘₐₓ = L̅ₘₐₓ* while, currently, for operation with shared spectrum channel access, *Lₘₐₓ* = 8 for *L̅ₘₐₓ* = 10 and 15 kHz sub-carrier spacing (SCS) of SSBs and for *L̅ₘₐₓ* = 20 and 30 kHz SCS of SSBs.

Frequency bands for 5G NR are currently separated into two different frequency ranges: FR1 and FR2. FR1 primarily includes sub-6 GHz frequency bands, some of which are bands traditionally used by previous standards. FR1 has been extended to cover potential new spectrum offerings from 410 MHz to 7125 MHz. FR2 includes frequency bands from 24.25 GHz to 52.6 GHz (millimeter wave range). Standardization for carrier frequencies (spectrums) higher than 52600 MHz (or, equivalently, higher than 52.6 GHz, or, in short, 52.6+ GHz) are under development. FR2 may include 52.6+ GHz frequencies. Alternatively, 52.6+ GHz may form another frequency range of their own, *e.g*., FR2+, FR2.5, or FR3. Regardless of the naming, *L̅ₘₐₓ* may be equal to 64 or a larger value (*e.g*., 80, or 128) for 52.6+ GHz frequencies. Also, within 52.6+ GHz spectrum, *L̅ₘₐₓ* for the operation with shared spectrum channel access may be different from *L̅ₘₐₓ* for the operation without shared spectrum channel access.

The periodicity of the SSB sets, that is, the distance in time between SSBs with the same index in two consecutive SSB sets, may be expressed in terms of units of time, such as milliseconds, or in terms of number of slots where each slot is comprised of *X* consecutive OFDM symbols. In current 5G systems, *X* = 14.

### SUMMARY

The invention and its scope of protection is defined by the appended independent claims. Embodiments of the invention are defined by the appended dependent claims. The following aspects and implementations of the summary provide examples of how technical subject matters can be combined.

Aspects of the present application relate to processing an SSB candidate, received in one radio frame, to obtain timing information helpful for allowing a UE to determine a boundary for every radio frame. Beneficially, changes in the periodicity of the transmission of SSB sets may allow the UE more frequent opportunities to determine the boundary for the radio frames. However, in the absence of additional information, the UE may not be able to determine a location, for an SSB set, within a given radio frame. Aspects of the present application relate to a manner of including the additional information in an SSB and the processing of the SSB to obtain the additional information.

In contemplation of a reduction in minimum SSB periodicity, in those cases configured for an SSB subcarrier spacing (SCS) that is higher than known SSB SCS, it is considered that additional information would assist the UE in determining a boundary of the radio frames. It is proposed, herein, to indicate N SSB location (SSB-L) bits in PBCH payload that is generated in layer 1. In some embodiments, to make room for the SSB-L bits, *N* system frame number (SFN) bits are transferred from the PBCH payload that is generated in layer 1 to the PBCH payload that is generated in layers higher than layer 1. In this way, an increase to the size of the PBCH payload that is generated in layer 1 may be avoided. In some embodiments, N SFN bits are transferred to a system information block, thereby avoiding an increase to either portion of the PBCH payload.

According to an aspect of the present disclosure, there is provided a method of synchronizing with a transmitter. The method includes receiving, from the transmitter, a particular synchronization signal/physical broadcast channel block (SS/PBCH block, or, in short, SSB), where the particular SSB is included among a plurality of SSBs in a particular SSB set in a radio frame, the radio frame including two half frames, processing the particular SSB to determine a value of a half frame bit, processing the particular SSB to determine a value of an SSB set location indication, the SSB set location indication indicative of a location, within a half frame, of the particular SSB set, processing the particular SSB to determine a value of a particular candidate SSB index and determining, based on the value of the half frame bit, the value of the SSB set location indication and the value of the particular candidate SSB index, a boundary for the radio frame.

According to an aspect of the present disclosure, there is provided an electronic device. The electronic device includes a receiving module configured to receive a particular synchronization signal/physical broadcast channel block (SS/PBCH block, or, in short, SSB), where the particular SSB is included among a plurality of SSBs in a particular SSB set in a radio frame, the radio frame including two half frames and a processing module. The processing module is configured to process the particular SSB to determine a value of a half frame bit, process the particular SSB to determine a value of an SSB set location indication, the SSB set location indication indicative of a location, within a half frame, of the particular SSB set, process the particular SSB to determine a value of an index for the particular candidate SSB and determine, based on the value of the half frame bit, the value of the SSB set location indication and the value of index for the particular candidate SSB, a boundary for the radio frame. According to an aspect of the present disclosure, there is provided a computer-readable medium storing instructions. Execution, by a processor, of the instructions causes the processor to receive a particular synchronization signal/physical broadcast channel (SS/PBCH) block (SSB), where the particular SSB is included among a plurality of SSBs in a particular SSB set in a radio frame, the radio frame including two half frames, process the particular SSB to determine a value of an SSB set location indication, the SSB set location indication indicative of a location, within a half frame of the two half frames, of the particular SSB set and determine, based on the value of the SSB set location indication, a boundary for the radio frame.

### BRIEF DESCRIPTION OF THE DRAWINGS

For a more complete understanding of the present embodiments, and the advantages thereof, reference is now made, by way of example, to the following descriptions taken in conjunction with the accompanying drawings, in which:
FIG. 1 illustrates, in a schematic diagram, a communication system in which embodiments of the disclosure may occur, the communication system includes multiple example electronic devices and multiple example transmit receive points along with various networks;
FIG. 2 illustrates, in a block diagram, the communication system of FIG. 1, the communication system includes multiple example electronic devices, an example terrestrial transmit receive point and an example non-terrestrial transmit receive point along with various networks;
FIG. 3 illustrates, as a block diagram, elements of an example electronic device of FIG. 2, elements of an example terrestrial transmit receive point of FIG. 2 and elements of an example non-terrestrial transmit receive point of FIG. 2, in accordance with aspects of the present application;
FIG. 4 illustrates, as a block diagram, various modules that may be included in an example electronic device, an example terrestrial transmit receive point and an example non-terrestrial transmit receive point, in accordance with aspects of the present application;
FIG. 5 illustrates a portion of a radio frame associated with a known SSB SCS;
FIG. 6 illustrates an example portion of a radio frame associated with a SSB SCS that is higher than the SSB SCS with which the radio frame of FIG. 5 is associated while SSB periodicity remains the same as illustrated in FIG. 5;
FIG. 7 illustrates a proposed portion of a radio frame associated with a SSB SCS that is the same as the SSB SCS in FIG. 6, wherein the SSB periodicity has been reduced in accordance with aspects of the present application;
FIG. 8 illustrates example steps in a method of determining a boundary for a radio frame, in accordance with aspects of the present application;
FIG. 9 illustrates a table that may be useful for establishing the number of bits to include in the PBCH payload to indicate the location of the SSB set within a given half frame when two SSB candidates may be transmitted per slot, in accordance with aspects of the present application; and
FIG. 10 illustrates a table that may be useful for establishing the number of bits to include in the PBCH payload to indicate the location of the SSB set within a given half frame when a single SSB candidate may be transmitted per slot, in accordance with aspects of the present application.

### DETAILED DESCRIPTION OF ILLUSTRATIVE EMBODIMENTS

For illustrative purposes, specific example embodiments will now be explained in greater detail in conjunction with the figures.

The embodiments set forth herein represent information sufficient to practice the claimed subject matter and illustrate ways of practicing such subject matter. Upon reading the following description in light of the accompanying figures, those of skill in the art will understand the concepts of the claimed subject matter and will recognize applications of these concepts not particularly addressed herein. The invention is defined by the appended claims.

Moreover, it will be appreciated that any module, component, or device disclosed herein that executes instructions may include, or otherwise have access to, a non-transitory computer/processor readable storage medium or media for storage of information, such as computer/processor readable instructions, data structures, program modules and/or other data. A non-exhaustive list of examples of non-transitory computer/processor readable storage media includes magnetic cassettes, magnetic tape, magnetic disk storage or other magnetic storage devices, optical disks such as compact disc read-only memory (CD-ROM), digital video discs or digital versatile discs (*i.e*., DVDs), Blu-ray Disc^{™}, or other optical storage, volatile and non-volatile, removable and non-removable media implemented in any method or technology, random-access memory (RAM), read-only memory (ROM), electrically erasable programmable read-only memory (EEPROM), flash memory or other memory technology. Any such non-transitory computer/processor storage media may be part of a device or accessible or connectable thereto. Computer/processor readable/executable instructions to implement an application or module described herein may be stored or otherwise held by such non-transitory computer/processor readable storage media.

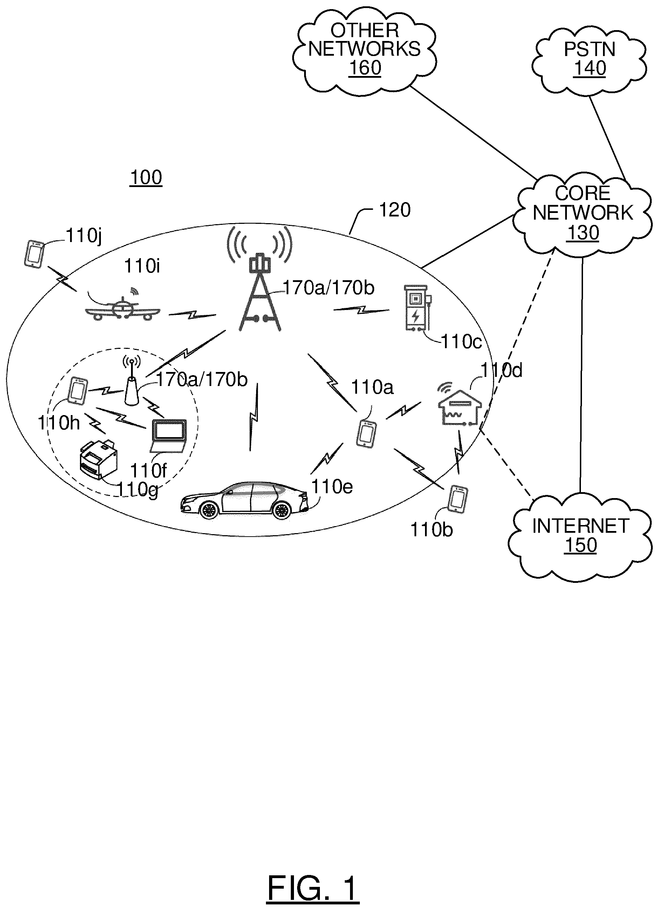

Referring to FIG. 1, as an illustrative example without limitation, a simplified schematic illustration of a communication system is provided. The communication system 100 comprises a radio access network 120. The radio access network 120 may be a next generation (*e.g*., sixth generation, "6G," or later) radio access network, or a legacy (*e.g*., 5G, 4G, 3G or 2G) radio access network. One or more communication electric device (ED) 110a, 110b, 110c, 110d, 110e, 110f, 110g, 110h, 110i, 110j (generally referred to as 110) may be interconnected to one another or connected to one or more network nodes (170a, 170b, generally referred to as 170) in the radio access network 120. A core network 130 may be a part of the communication system and may be dependent or independent of the radio access technology used in the communication system 100. Also, the communication system 100 comprises a public switched telephone network (PSTN) 140, the internet 150, and other networks 160.

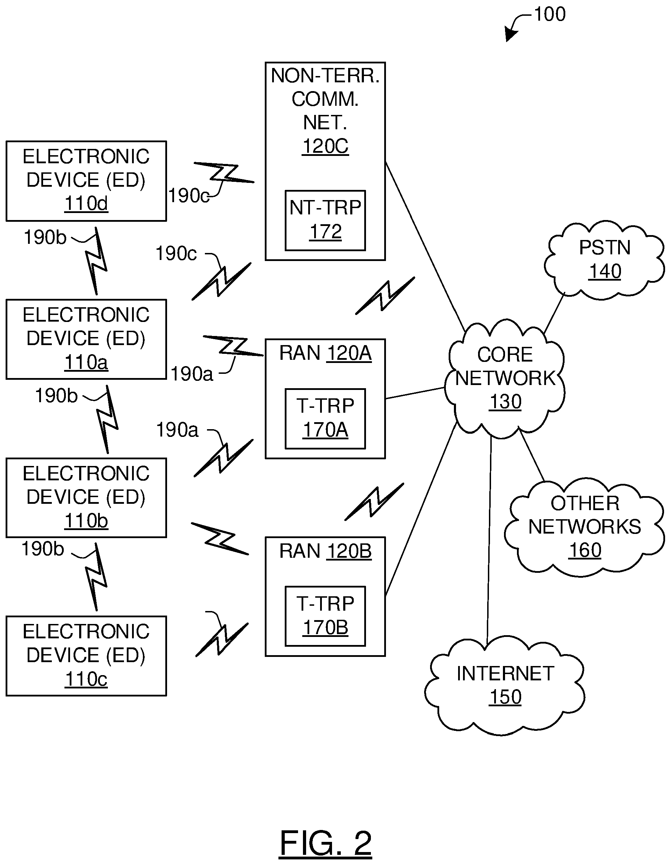

FIG. 2 illustrates an example communication system 100. In general, the communication system 100 enables multiple wireless or wired elements to communicate data and other content. The purpose of the communication system 100 may be to provide content, such as voice, data, video, and/or text, via broadcast, multicast and unicast, *etc.* The communication system 100 may operate by sharing resources, such as carrier spectrum bandwidth, between its constituent elements. The communication system 100 may include a terrestrial communication system and/or a non-terrestrial communication system. The communication system 100 may provide a wide range of communication services and applications (such as earth monitoring, remote sensing, passive sensing and positioning, navigation and tracking, autonomous delivery and mobility, *etc.*)*.* The communication system 100 may provide a high degree of availability and robustness through a joint operation of a terrestrial communication system and a non-terrestrial communication system. For example, integrating a non-terrestrial communication system (or components thereof) into a terrestrial communication system can result in what may be considered a heterogeneous network comprising multiple layers. Compared to conventional communication networks, the heterogeneous network may achieve better overall performance through efficient multi-link joint operation, more flexible functionality sharing and faster physical layer link switching between terrestrial networks and non- terrestrial networks.

The terrestrial communication system and the non-terrestrial communication system could be considered sub-systems of the communication system. In the example shown in FIG. 2, the communication system 100 includes electronic devices (ED) 110a, 110b, 110c, 110d (generally referred to as ED 110), radio access networks (RANs) 120a, 120b, a non-terrestrial communication network 120c, a core network 130, a public switched telephone network (PSTN) 140, the Internet 150 and other networks 160. The RANs 120a, 120b include respective base stations (BSs) 170a, 170b, which may be generally referred to as terrestrial transmit and receive points (T-TRPs) 170a, 170b. The non-terrestrial communication network 120c includes an access node 172, which may be generally referred to as a non-terrestrial transmit and receive point (NT-TRP) 172.

Any ED 110 may be alternatively or additionally configured to interface, access, or communicate with any T-TRP 170a, 170b and NT-TRP 172, the Internet 150, the core network 130, the PSTN 140, the other networks 160, or any combination of the preceding. In some examples, the ED 110a may communicate an uplink and/or downlink transmission over a terrestrial air interface 190a with T-TRP 170a. In some examples, the EDs 110a, 110b, 110c and 110d may also communicate directly with one another via one or more sidelink air interfaces 190b. In some examples, the ED 110d may communicate an uplink and/or downlink transmission over a non-terrestrial air interface 190c with NT-TRP 172.

The air interfaces 190a and 190b may use similar communication technology, such as any suitable radio access technology. For example, the communication system 100 may implement one or more channel access methods, such as code division multiple access (CDMA), space division multiple access (SDMA), time division multiple access (TDMA), frequency division multiple access (FDMA), orthogonal FDMA (OFDMA), or single-carrier FDMA (SC-FDMA) in the air interfaces 190a and 190b. The air interfaces 190a and 190b may utilize other higher dimension signal spaces, which may involve a combination of orthogonal and/or non-orthogonal dimensions.

The non-terrestrial air interface 190c can enable communication between the ED 110d and one or multiple NT-TRPs 172 via a wireless link or simply a link. For some examples, the link is a dedicated connection for unicast transmission, a connection for broadcast transmission, or a connection between a group of EDs 110 and one or multiple NT-TRPs 175 for multicast transmission.

The RANs 120a and 120b are in communication with the core network 130 to provide the EDs 110a, 110b, 110c with various services such as voice, data and other services. The RANs 120a and 120b and/or the core network 130 may be in direct or indirect communication with one or more other RANs (not shown), which may or may not be directly served by core network 130 and may, or may not, employ the same radio access technology as RAN 120a, RAN 120b or both. The core network 130 may also serve as a gateway access between (i) the RANs 120a and 120b or the EDs 110a, 110b, 110c or both, and (ii) other networks (such as the PSTN 140, the Internet 150, and the other networks 160). In addition, some or all of the EDs 110a, 110b, 110c may include functionality for communicating with different wireless networks over different wireless links using different wireless technologies and/or protocols. Instead of wireless communication (or in addition thereto), the EDs 110a, 110b, 110c may communicate via wired communication channels to a service provider or switch (not shown) and to the Internet 150. The PSTN 140 may include circuit switched telephone networks for providing plain old telephone service (POTS). The Internet 150 may include a network of computers and subnets (intranets) or both and incorporate protocols, such as Internet Protocol (IP), Transmission Control Protocol (TCP), User Datagram Protocol (UDP). The EDs 110a, 110b, 110c may be multimode devices capable of operation according to multiple radio access technologies and may incorporate multiple transceivers necessary to support such.

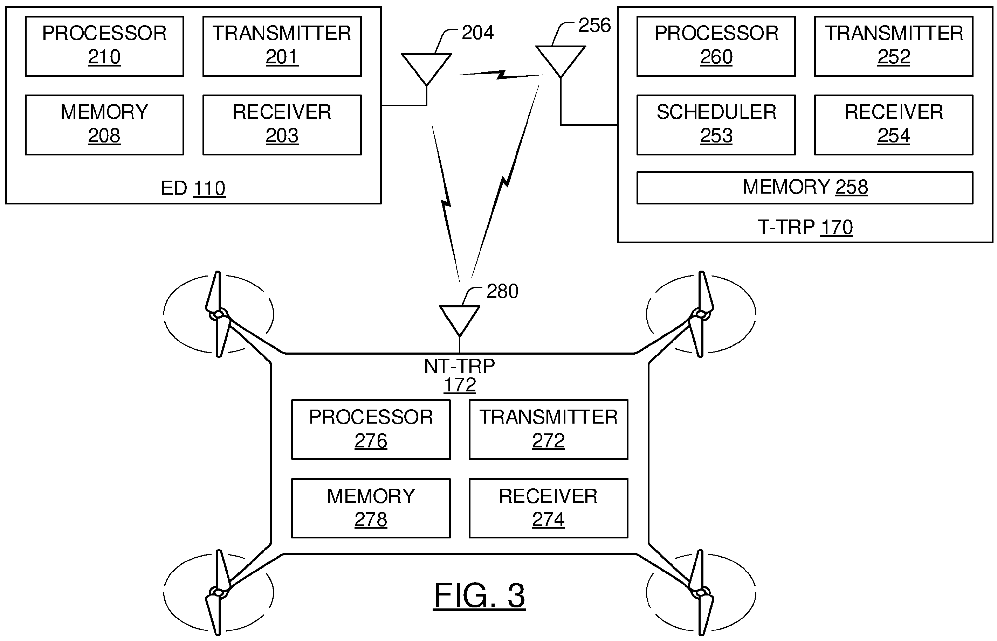

FIG. 3 illustrates another example of an ED 110 and a base station 170a, 170b and/or 170c. The ED 110 is used to connect persons, objects, machines, *etc.* The ED 110 may be widely used in various scenarios, for example, cellular communications, device-to-device (D2D), vehicle to everything (V2X), peer-to-peer (P2P), machine-to-machine (M2M), machine-type communications (MTC), Internet of things (IOT), virtual reality (VR), augmented reality (AR), industrial control, self-driving, remote medical, smart grid, smart furniture, smart office, smart wearable, smart transportation, smart city, drones, robots, remote sensing, passive sensing, positioning, navigation and tracking, autonomous delivery and mobility, *etc.*

Each ED 110 represents any suitable end user device for wireless operation and may include such devices (or may be referred to) as a user equipment/device (UE), a wireless transmit/receive unit (WTRU), a mobile station, a fixed or mobile subscriber unit, a cellular telephone, a station (STA), a machine type communication (MTC) device, a personal digital assistant (PDA), a smartphone, a laptop, a computer, a tablet, a wireless sensor, a consumer electronics device, a smart book, a vehicle, a car, a truck, a bus, a train, or an IoT device, an industrial device, or apparatus (*e.g*., communication module, modem, or chip) in the forgoing devices, among other possibilities. Future generation EDs 110 may be referred to using other terms. The base stations 170a and 170b each T-TRPs and will, hereafter, be referred to as T-TRP 170. Also shown in FIG. 3, a NT-TRP will hereafter be referred to as NT-TRP 172. Each ED 110 connected to the T-TRP 170 and/or the NT-TRP 172 can be dynamically or semi-statically turned-on (*i.e.,* established, activated or enabled), turned-off (*i.e*., released, deactivated or disabled) and/or configured in response to one of more of: connection availability; and connection necessity.

The ED 110 includes a transmitter 201 and a receiver 203 coupled to one or more antennas 204. Only one antenna 204 is illustrated. One, some, or all of the antennas 204 may, alternatively, be panels. The transmitter 201 and the receiver 203 may be integrated, *e.g*., as a transceiver. The transceiver is configured to modulate data or other content for transmission by the at least one antenna 204 or by a network interface controller (NIC). The transceiver may also be configured to demodulate data or other content received by the at least one antenna 204. Each transceiver includes any suitable structure for generating signals for wireless or wired transmission and/or processing signals received wirelessly or by wire. Each antenna 204 includes any suitable structure for transmitting and/or receiving wireless or wired signals.

The ED 110 includes at least one memory 208. The memory 208 stores instructions and data used, generated, or collected by the ED 110. For example, the memory 208 could store software instructions or modules configured to implement some or all of the functionality and/or embodiments described herein and that are executed by one or more processing unit(s) (*e.g*., a processor 210). Each memory 208 includes any suitable volatile and/or non-volatile storage and retrieval device(s). Any suitable type of memory may be used, such as random access memory (RAM), read only memory (ROM), hard disk, optical disc, subscriber identity module (SIM) card, memory stick, secure digital (SD) memory card, on-processor cache and the like.

The ED 110 may further include one or more input/output devices (not shown) or interfaces (such as a wired interface to the Internet 150 in FIG. 1). The input/output devices permit interaction with a user or other devices in the network. Each input/output device includes any suitable structure for providing information to, or receiving information from, a user, such as through operation as a speaker, a microphone, a keypad, a keyboard, a display or a touch screen, including network interface communications.

The ED 110 includes the processor 210 for performing operations including those operations related to preparing a transmission for uplink transmission to the NT-TRP 172 and/or the T-TRP 170, those operations related to processing downlink transmissions received from the NT-TRP 172 and/or the T-TRP 170, and those operations related to processing sidelink transmission to and from another ED 110. Processing operations related to preparing a transmission for uplink transmission may include operations such as encoding, modulating, transmit beamforming and generating symbols for transmission. Processing operations related to processing downlink transmissions may include operations such as receive beamforming, demodulating and decoding received symbols. Depending upon the embodiment, a downlink transmission may be received by the receiver 203, possibly using receive beamforming, and the processor 210 may extract signaling from the downlink transmission (*e.g.,* by detecting and/or decoding the signaling). An example of signaling may be a reference signal transmitted by the NT-TRP 172 and/or by the T-TRP 170. In some embodiments, the processor 210 implements the transmit beamforming and/or the receive beamforming based on the indication of beam direction, *e.g*., beam angle information (BAI), received from the T-TRP 170. In some embodiments, the processor 210 may perform operations relating to network access (*e.g*., initial access) and/or downlink synchronization, such as operations relating to detecting a synchronization sequence, decoding and obtaining the system information, *etc.* In some embodiments, the processor 210 may perform channel estimation, *e.g*., using a reference signal received from the NT-TRP 172 and/or from the T-TRP 170.

Although not illustrated, the processor 210 may form part of the transmitter 201 and/or part of the receiver 203. Although not illustrated, the memory 208 may form part of the processor 210.

The processor 210, the processing components of the transmitter 201 and the processing components of the receiver 203 may each be implemented by the same or different one or more processors that are configured to execute instructions stored in a memory (*e.g*., the in memory 208). Alternatively, some or all of the processor 210, the processing components of the transmitter 201 and the processing components of the receiver 203 may each be implemented using dedicated circuitry, such as a programmed field-programmable gate array (FPGA), a graphical processing unit (GPU), or an application-specific integrated circuit (ASIC).

The T-TRP 170 may be known by other names in some implementations, such as a base station, a base transceiver station (BTS), a radio base station, a network node, a network device, a device on the network side, a transmit/receive node, a Node B, an evolved NodeB (eNodeB or eNB), a Home eNodeB, a next Generation NodeB (gNB), a transmission point (TP), a site controller, an access point (AP), a wireless router, a relay station, a remote radio head, a terrestrial node, a terrestrial network device, a terrestrial base station, a base band unit (BBU), a remote radio unit (RRU), an active antenna unit (AAU), a remote radio head (RRH), a central unit (CU), a distribute unit (DU), a positioning node, among other possibilities. The T-TRP 170 may be a macro BS, a pico BS, a relay node, a donor node, or the like, or combinations thereof. The T-TRP 170 may refer to the forgoing devices or refer to apparatus (*e.g.,* a communication module, a modem or a chip) in the forgoing devices.

In some embodiments, the parts of the T-TRP 170 may be distributed. For example, some of the modules of the T-TRP 170 may be located remote from the equipment that houses antennas 256 for the T-TRP 170, and may be coupled to the equipment that houses antennas 256 over a communication link (not shown) sometimes known as front haul, such as common public radio interface (CPRI). Therefore, in some embodiments, the term T-TRP 170 may also refer to modules on the network side that perform processing operations, such as determining the location of the ED 110, resource allocation (scheduling), message generation, and encoding/decoding, and that are not necessarily part of the equipment that houses antennas 256 of the T-TRP 170. The modules may also be coupled to other T-TRPs. In some embodiments, the T-TRP 170 may actually be a plurality of T-TRPs that are operating together to serve the ED 110, *e.g*., through the use of coordinated multipoint transmissions.

As illustrated in FIG. 3, the T-TRP 170 includes at least one transmitter 252 and at least one receiver 254 coupled to one or more antennas 256. Only one antenna 256 is illustrated. One, some, or all of the antennas 256 may, alternatively, be panels. The transmitter 252 and the receiver 254 may be integrated as a transceiver. The T-TRP 170 further includes a processor 260 for performing operations including those related to: preparing a transmission for downlink transmission to the ED 110; processing an uplink transmission received from the ED 110; preparing a transmission for backhaul transmission to the NT-TRP 172; and processing a transmission received over backhaul from the NT-TRP 172. Processing operations related to preparing a transmission for downlink or backhaul transmission may include operations such as encoding, modulating, precoding (*e.g*., multiple input multiple output, "MIMO," precoding), transmit beamforming and generating symbols for transmission. Processing operations related to processing received transmissions in the uplink or over backhaul may include operations such as receive beamforming, demodulating received symbols and decoding received symbols. The processor 260 may also perform operations relating to network access (*e.g*., initial access) and/or downlink synchronization, such as generating the content of synchronization signal blocks (SSBs), generating the system information, *etc.* In some embodiments, the processor 260 also generates an indication of beam direction, *e.g*., BAI, which may be scheduled for transmission by a scheduler 253. The processor 260 performs other network-side processing operations described herein, such as determining the location of the ED 110, determining where to deploy the NT-TRP 172, *etc.* In some embodiments, the processor 260 may generate signaling, *e.g*., to configure one or more parameters of the ED 110 and/or one or more parameters of the NT-TRP 172. Any signaling generated by the processor 260 is sent by the transmitter 252. Note that "signaling," as used herein, may alternatively be called control signaling. Dynamic signaling may be transmitted in a control channel, *e.g*., a physical downlink control channel (PDCCH) and static, or semi-static, higher layer signaling may be included in a packet transmitted in a data channel, *e.g.,* in a physical downlink shared channel (PDSCH).

The scheduler 253 may be coupled to the processor 260. The scheduler 253 may be included within, or operated separately from, the T-TRP 170. The scheduler 253 may schedule uplink, downlink and/or backhaul transmissions, including issuing scheduling grants and/or configuring scheduling-free ("configured grant") resources. The T-TRP 170 further includes a memory 258 for storing information and data. The memory 258 stores instructions and data used, generated, or collected by the T-TRP 170. For example, the memory 258 could store software instructions or modules configured to implement some or all of the functionality and/or embodiments described herein and that are executed by the processor 260.

Although not illustrated, the processor 260 may form part of the transmitter 252 and/or part of the receiver 254. Also, although not illustrated, the processor 260 may implement the scheduler 253. Although not illustrated, the memory 258 may form part of the processor 260.

The processor 260, the scheduler 253, the processing components of the transmitter 252 and the processing components of the receiver 254 may each be implemented by the same, or different one of, one or more processors that are configured to execute instructions stored in a memory, *e.g.,* in the memory 258. Alternatively, some or all of the processor 260, the scheduler 253, the processing components of the transmitter 252 and the processing components of the receiver 254 may be implemented using dedicated circuitry, such as a FPGA, a GPU or an ASIC.

Notably, the NT-TRP 172 is illustrated as a drone only as an example, the NT-TRP 172 may be implemented in any suitable non-terrestrial form. Also, the NT-TRP 172 may be known by other names in some implementations, such as a non-terrestrial node, a non-terrestrial network device, or a non-terrestrial base station. The NT-TRP 172 includes a transmitter 272 and a receiver 274 coupled to one or more antennas 280. Only one antenna 280 is illustrated. One, some, or all of the antennas may alternatively be panels. The transmitter 272 and the receiver 274 may be integrated as a transceiver. The NT-TRP 172 further includes a processor 276 for performing operations including those related to: preparing a transmission for downlink transmission to the ED 110; processing an uplink transmission received from the ED 110; preparing a transmission for backhaul transmission to T-TRP 170; and processing a transmission received over backhaul from the T-TRP 170. Processing operations related to preparing a transmission for downlink or backhaul transmission may include operations such as encoding, modulating, precoding (*e.g*., MIMO precoding), transmit beamforming and generating symbols for transmission. Processing operations related to processing received transmissions in the uplink or over backhaul may include operations such as receive beamforming, demodulating received signals and decoding received symbols. In some embodiments, the processor 276 implements the transmit beamforming and/or receive beamforming based on beam direction information (*e.g*., BAI) received from the T-TRP 170. In some embodiments, the processor 276 may generate signaling, *e.g*., to configure one or more parameters of the ED 110. In some embodiments, the NT-TRP 172 implements physical layer processing but does not implement higher layer functions such as functions at the medium access control (MAC) or radio link control (RLC) layer. As this is only an example, more generally, the NT-TRP 172 may implement higher layer functions in addition to physical layer processing.

The NT-TRP 172 further includes a memory 278 for storing information and data. Although not illustrated, the processor 276 may form part of the transmitter 272 and/or part of the receiver 274. Although not illustrated, the memory 278 may form part of the processor 276.

The processor 276, the processing components of the transmitter 272 and the processing components of the receiver 274 may each be implemented by the same or different one or more processors that are configured to execute instructions stored in a memory, *e.g*., in the memory 278. Alternatively, some or all of the processor 276, the processing components of the transmitter 272 and the processing components of the receiver 274 may be implemented using dedicated circuitry, such as a programmed FPGA, a GPU or an ASIC. In some embodiments, the NT-TRP 172 may actually be a plurality of NT-TRPs that are operating together to serve the ED 110, *e.g*., through coordinated multipoint transmissions.

The T-TRP 170, the NT-TRP 172, and/or the ED 110 may include other components, but these have been omitted for the sake of clarity.

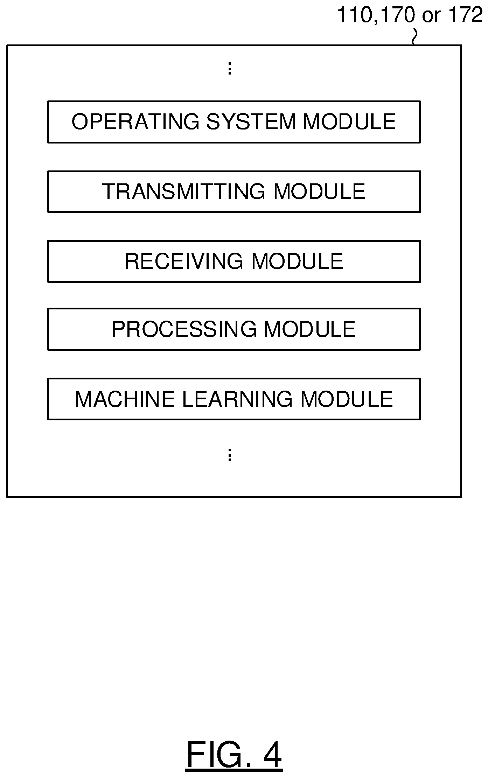

One or more steps of the embodiment methods provided herein may be performed by corresponding units or modules, according to FIG. 4. FIG. 4 illustrates units or modules in a device, such as in the ED 110, in the T-TRP 170 or in the NT-TRP 172. For example, a signal may be transmitted by a transmitting unit or by a transmitting module. A signal may be received by a receiving unit or by a receiving module. A signal may be processed by a processing unit or a processing module. Other steps may be performed by an artificial intelligence (AI) or machine learning (ML) module. The respective units or modules may be implemented using hardware, one or more components or devices that execute software, or a combination thereof. For instance, one or more of the units or modules may be an integrated circuit, such as a programmed FPGA, a GPU or an ASIC. It will be appreciated that where the modules are implemented using software for execution by a processor, for example, the modules may be retrieved by a processor, in whole or part as needed, individually or together for processing, in single or multiple instances, and that the modules themselves may include instructions for further deployment and instantiation.

Additional details regarding the EDs 110, the T-TRP 170 and the NT-TRP 172 are known to those of skill in the art. As such, these details are omitted here.

An air interface generally includes a number of components and associated parameters that collectively specify how a transmission is to be sent and/or received over a wireless communications link between two or more communicating devices. For example, an air interface may include one or more components defining the waveform(s), frame structure(s), multiple access scheme(s), protocol(s), coding scheme(s) and/or modulation scheme(s) for conveying information (*e.g*., data) over a wireless communications link. The wireless communications link may support a link between a radio access network and user equipment (*e.g*., a "Uu" link), and/or the wireless communications link may support a link between device and device, such as between two user equipments (*e.g*., a "sidelink"), and/or the wireless communications link may support a link between a non-terrestrial (NT)-communication network and user equipment (UE). The following are some examples for the above components.

A waveform component may specify a shape and form of a signal being transmitted. Waveform options may include orthogonal multiple access waveforms and non-orthogonal multiple access waveforms. Non-limiting examples of such waveform options include Orthogonal Frequency Division Multiplexing (OFDM), Filtered OFDM (f-OFDM), Time windowing OFDM, Filter Bank Multicarrier (FBMC), Universal Filtered Multicarrier (UFMC), Generalized Frequency Division Multiplexing (GFDM), Wavelet Packet Modulation (WPM), Faster Than Nyquist (FTN) Waveform and low Peak to Average Power Ratio Waveform (low PAPR WF).

A frame structure component may specify a configuration of a frame or group of frames. The frame structure component may indicate one or more of a time, frequency, pilot signature, code or other parameter of the frame or group of frames. More details of frame structure will be discussed hereinafter.

A multiple access scheme component may specify multiple access technique options, including technologies defining how communicating devices share a common physical channel, such as: TDMA; FDMA; CDMA; SDMA; SC-FDMA; Low Density Signature Multicarrier CDMA (LDS-MC-CDMA); Non-Orthogonal Multiple Access (NOMA); Pattern Division Multiple Access (PDMA); Lattice Partition Multiple Access (LPMA); Resource Spread Multiple Access (RSMA); and Sparse Code Multiple Access (SCMA). Furthermore, multiple access technique options may include: scheduled access vs. non-scheduled access, also known as grant-free access; non-orthogonal multiple access vs. orthogonal multiple access, *e.g*., via a dedicated channel resource (*e.g*., no sharing between multiple communicating devices); contention-based shared channel resources vs. non-contention-based shared channel resources; and cognitive radio-based access.

A hybrid automatic repeat request (HARQ) protocol component may specify how a transmission and/or a re-transmission is to be made. Non-limiting examples of transmission and/or re-transmission mechanism options include those that specify a scheduled data pipe size, a signaling mechanism for transmission and/or re-transmission and a re-transmission mechanism.

A coding and modulation component may specify how information being transmitted may be encoded/decoded and modulated/demodulated for transmission/reception purposes. Coding may refer to methods of error detection and forward error correction. Non-limiting examples of coding options include turbo trellis codes, turbo product codes, fountain codes, low-density parity check codes and polar codes. Modulation may refer, simply, to the constellation (including, for example, the modulation technique and order), or more specifically to various types of advanced modulation methods such as hierarchical modulation and low PAPR modulation.

In some embodiments, the air interface may be a "one-size-fits-all" concept. For example, it may be that the components within the air interface cannot be changed or adapted once the air interface is defined. In some implementations, only limited parameters or modes of an air interface, such as a cyclic prefix (CP) length or a MIMO mode, can be configured. In some embodiments, an air interface design may provide a unified or flexible framework to support frequencies below known 6 GHz bands and frequencies beyond the 6 GHz bands (*e.g*., mmWave bands) for both licensed and unlicensed access. As an example, flexibility of a configurable air interface provided by a scalable numerology and symbol duration may allow for transmission parameter optimization for different spectrum bands and for different services/devices. As another example, a unified air interface may be self-contained in a frequency domain and a frequency domain self-contained design may support more flexible RAN slicing through channel resource sharing between different services in both frequency and time.

A frame structure is a feature of the wireless communication physical layer that defines a time domain signal transmission structure to, *e.g*., allow for timing reference and timing alignment of basic time domain transmission units. Wireless communication between communicating devices may occur on time-frequency resources governed by a frame structure. The frame structure may, sometimes, instead be called a radio frame structure.

Depending upon the frame structure and/or configuration of frames in the frame structure, frequency division duplex (FDD) and/or time-division duplex (TDD) and/or full duplex (FD) communication may be possible. FDD communication is when transmissions in different directions (e.g., uplink vs. downlink) occur in different frequency bands. TDD communication is when transmissions in different directions (*e.g*., uplink vs. downlink) occur over different time durations. FD communication is when transmission and reception occurs on the same time-frequency resource, *i.e*., a device can both transmit and receive on the same frequency resource contemporaneously.

One example of a frame structure is a frame structure, specified for use in the known long-term evolution (LTE) cellular systems, having the following specifications: each frame is 10 ms in duration; each frame has 10 subframes, which subframes are each 1 ms in duration; each subframe includes two slots, each of which slots is 0.5 ms in duration; each slot is for the transmission of seven OFDM symbols (assuming normal CP); each OFDM symbol has a symbol duration and a particular bandwidth (or partial bandwidth or bandwidth partition) related to the number of subcarriers and subcarrier spacing; the frame structure is based on OFDM waveform parameters such as subcarrier spacing and CP length (where the CP has a fixed length or limited length options); and the switching gap between uplink and downlink in TDD is specified as the integer time of OFDM symbol duration.

Another example of a frame structure is a frame structure, specified for use in the known new radio (NR) cellular systems, having the following specifications: multiple subcarrier spacings are supported, each subcarrier spacing corresponding to a respective numerology; the frame structure depends on the numerology but, in any case, the frame length is set at 10 ms and each frame consists of ten subframes, each subframe of 1 ms duration; a slot is defined as 14 OFDM symbols; and slot length depends upon the numerology. For example, the NR frame structure for normal CP 15 kHz subcarrier spacing ("numerology 1") and the NR frame structure for normal CP 30 kHz subcarrier spacing ("numerology 2") are different. For 15 kHz subcarrier spacing, the slot length is 1 ms and, for 30 kHz subcarrier spacing, the slot length is 0.5 ms. The NR frame structure may have more flexibility than the LTE frame structure.

Another example of a frame structure is, *e.g*., for use in a 6G network or a later network. In a flexible frame structure, a symbol block may be defined to have a duration that is the minimum duration of time that may be scheduled in the flexible frame structure. A symbol block may be a unit of transmission having an optional redundancy portion (*e.g*., CP portion) and an information (*e.g*., data) portion. An OFDM symbol is an example of a symbol block. A symbol block may alternatively be called a symbol. Embodiments of flexible frame structures include different parameters that may be configurable, e.g., frame length, subframe length, symbol block length, *etc.* A non-exhaustive list of possible configurable parameters, in some embodiments of a flexible frame structure, includes: frame length; subframe duration; slot configuration; subcarrier spacing (SCS); flexible transmission duration of basic transmission unit; and flexible switch gap.

The frame length need not be limited to 10 ms and the frame length may be configurable and change over time. In some embodiments, each frame includes one or multiple downlink synchronization channels and/or one or multiple downlink broadcast channels and each synchronization channel and/or broadcast channel may be transmitted in a different direction by different beamforming. The frame length may be more than one possible value and configured based on the application scenario. For example, autonomous vehicles may require relatively fast initial access, in which case the frame length may be set to 5 ms for autonomous vehicle applications. As another example, smart meters on houses may not require fast initial access, in which case the frame length may be set as 20 ms for smart meter applications.

A subframe might or might not be defined in the flexible frame structure, depending upon the implementation. For example, a frame may be defined to include slots, but no subframes. In frames in which a subframe is defined, *e.g*., for time domain alignment, the duration of the subframe may be configurable. For example, a subframe may be configured to have a length of 0.1 ms or 0.2 ms or 0.5 ms or 1 ms or 2 ms or 5 ms, *etc.* In some embodiments, if a subframe is not needed in a particular scenario, then the subframe length may be defined to be the same as the frame length or not defined.

A slot might or might not be defined in the flexible frame structure, depending upon the implementation. In frames in which a slot is defined, then the definition of a slot (*e.g*., in time duration and/or in number of symbol blocks) may be configurable. In one embodiment, the slot configuration is common to all UEs 110 or a group of UEs 110. For this case, the slot configuration information may be transmitted to the UEs 110 in a broadcast channel or common control channel(s). In other embodiments, the slot configuration may be UE specific, in which case the slot configuration information may be transmitted in a UE-specific control channel. In some embodiments, the slot configuration signaling can be transmitted together with frame configuration signaling and/or subframe configuration signaling. In other embodiments, the slot configuration may be transmitted independently from the frame configuration signaling and/or subframe configuration signaling. In general, the slot configuration may be system common, base station common, UE group common or UE specific.

The SCS may range from 15 KHz to 240 KHz or higher, for example, 480 kHz, 960 kHz, or even higher. The SCS may vary with the frequency of the spectrum and/or maximum UE speed to minimize the impact of Doppler shift and phase noise. In some examples, there may be separate transmission and reception frames and the SCS of symbols in the reception frame structure may be configured independently from the SCS of symbols in the transmission frame structure. The SCS in a reception frame may be different from the SCS in a transmission frame. In some examples, the SCS of each transmission frame may be half the SCS of each reception frame. If the SCS between a reception frame and a transmission frame is different, the difference does not necessarily have to scale by a factor of two, *e.g*., if more flexible symbol durations are implemented using inverse discrete Fourier transform (IDFT) instead of fast Fourier transform (FFT). Additional examples of frame structures can be used with different SCSs.

The basic transmission unit may be a symbol block (alternatively called a symbol), which, in general, includes a redundancy portion (referred to as the CP) and an information (*e.g*., data) portion. In some embodiments, the CP may be omitted from the symbol block. The CP length may be flexible and configurable. The CP length may be fixed within a frame or flexible within a frame and the CP length may possibly change from one frame to another, or from one group of frames to another group of frames, or from one subframe to another subframe, or from one slot to another slot, or dynamically from one scheduling to another scheduling. The information (*e.g*., data) portion may be flexible and configurable. Another possible parameter relating to a symbol block that may be defined is ratio of CP duration to information (*e.g*., data) duration. In some embodiments, the symbol block length may be adjusted according to: a channel condition (*e.g*., multi-path delay, Doppler); and/or a latency requirement; and/or an available time duration. As another example, a symbol block length may be adjusted to fit an available time duration in the frame.

In some examples, a frame may include both a downlink portion, for downlink transmissions from a base station 170, and an uplink portion, for uplink transmissions from the UEs 110. A gap may be present between each uplink and downlink portion, which gap is referred to as a switching gap. The switching gap length (duration) may be configurable. A switching gap duration may be fixed within a frame or flexible within a frame and a switching gap duration may possibly change from one frame to another, or from one group of frames to another group of frames, or from one subframe to another subframe, or from one slot to another slot, or dynamically from one scheduling to another scheduling.

A device, such as a base station 170, may provide coverage over a cell. Wireless communication with the device may occur over one or more carrier frequencies. A carrier frequency will be referred to as a carrier. A carrier may alternatively be called a component carrier (CC). A carrier may be characterized by its bandwidth and a reference frequency, *e.g*., the center frequency, the lowest frequency or the highest frequency of the carrier. A carrier may be on a licensed spectrum or an unlicensed spectrum. Wireless communication with the device may also, or instead, occur over one or more bandwidth parts (BWPs). For example, a carrier may have one or more BWPs. More generally, wireless communication with the device may occur over spectrum. The spectrum may comprise one or more carriers and/or one or more BWPs.

A cell may include one or multiple downlink resources and, optionally, one or multiple uplink resources. A cell may include one or multiple uplink resources and, optionally, one or multiple downlink resources. A cell may include both one or multiple downlink resources and one or multiple uplink resources. As an example, a cell might only include one downlink carrier/BWP, or only include one uplink carrier/BWP, or include multiple downlink carriers/BWPs, or include multiple uplink carriers/BWPs, or include one downlink carrier/BWP and one uplink carrier/BWP, or include one downlink carrier/BWP and multiple uplink carriers/BWPs, or include multiple downlink carriers/BWPs and one uplink carrier/BWP, or include multiple downlink carriers/BWPs and multiple uplink carriers/BWPs. In some embodiments, a cell may, instead or additionally, include one or multiple sidelink resources, including sidelink transmitting and receiving resources.

A BWP is a set of contiguous or non-contiguous frequency subcarriers on a carrier, or a set of contiguous or non-contiguous frequency subcarriers on multiple carriers, or a set of non-contiguous or contiguous frequency subcarriers, which may have one or more carriers.

In some embodiments, a carrier may have one or more BWPs, *e.g*., a carrier may have a bandwidth of 20 MHz and consist of one BWP or a carrier may have a bandwidth of 80 MHz and consist of two adjacent contiguous BWPs, *etc.* In other embodiments, a BWP may have one or more carriers, *e.g.,* a BWP may have a bandwidth of 40 MHz and consist of two adjacent contiguous carriers, where each carrier has a bandwidth of 20 MHz. In some embodiments, a BWP may comprise non-contiguous spectrum resources, which consists of multiple non-contiguous multiple carriers, where the first carrier of the non-contiguous multiple carriers may be in the mmW band, the second carrier may be in a low band (such as the 2 GHz band), the third carrier (if it exists) may be in THz band and the fourth carrier (if it exists) may be in visible light band. Resources in one carrier which belong to the BWP may be contiguous or non-contiguous. In some embodiments, a BWP has non-contiguous spectrum resources on one carrier.

The carrier, the BWP or the occupied bandwidth may be signaled by a network device (*e.g*., by a base station 170) dynamically, *e.g*., in physical layer control signaling such as the known downlink control channel (DCI), or semi-statically, *e.g*., in radio resource control (RRC) signaling or in signaling in the medium access control (MAC) layer, or be predefined based on the application scenario; or be determined by the UE 110 as a function of other parameters that are known by the UE 110, or may be fixed, *e.g*., by a standard.

Going to the future wireless network, the number of the new devices could be increased exponentially with diverse functionalities. Also, a lot more new applications and use cases than those associated with 5G may emerge with more diverse quality of service demands. These use cases will result in new key performance indications (KPIs) for the future wireless networks (for an example, a 6G network) that can be extremely challenging. It follows that sensing technologies and artificial intelligence (AI) technologies, especially machine learning (ML) and deep learning technologies, are being introduced to telecommunication for improving the system performance and efficiency.

AI/ML technologies may be applied to communication systems. In particular Al/ML technologies may be applied to communication in physical layer and to communication in media access control (MAC) layer.

For the physical layer, the AI/ML technologies may be employed to optimize component design and improve algorithm performance. For example, Al/ML technologies may be applied to channel coding, channel modelling, channel estimation, channel decoding, modulation, demodulation, MIMO, waveform, multiple access, PHY element parameter optimization and update, beam forming and tracking and sensing and positioning, *etc.*

For the MAC layer, AI/ML technologies may be utilized in the context of learning, predicting and making decisions to solve complicated optimization problems with better strategy and optimal solution. For one example, Al/ML technologies may be utilized to optimize the functionality in MAC for, *e.g*., intelligent TRP management, intelligent beam management, intelligent channel resource allocation, intelligent power control, intelligent spectrum utilization, intelligent modulation and coding scheme selection, intelligent HARQ strategy, intelligent transmit/receive mode adaption, *etc.*

Al/ML architectures usually involve multiple nodes. The multiple nodes can be organized in two modes, *i.e*., a centralized mode and a distributed mode, both of which modes can be deployed in an access network, a core network or an edge computing system or third network. A centralized training and computing architecture is restricted by communication overhead and strict user data privacy. Distributed training and computing architecture may be organized according to several frameworks, *e.g*., distributed machine learning and federated learning. Al/ML architectures include an intelligent controller, which can perform as a single agent or as a multi-agent, based on joint optimization or individual optimization. New protocols and signaling mechanisms may be established so that the corresponding interface link can be personalized with customized parameters to meet particular requirements while minimizing signaling overhead and maximizing the whole system spectrum efficiency by personalized Al technologies.

Further terrestrial and non-terrestrial networks can enable a new range of services and applications such as earth monitoring, remote sensing, passive sensing and positioning, navigation, tracking, autonomous delivery and mobility. Terrestrial network-based sensing and non-terrestrial network-based sensing could provide intelligent context-aware networks to enhance the UE experience. For an example, terrestrial network-based sensing and non-terrestrial network-based sensing may be shown to provide opportunities for localization applications and sensing applications based on new sets of features and service capabilities. Applications such as THz imaging and spectroscopy have the potential to provide continuous, real-time physiological information via dynamic, non-invasive, contactless measurements for future digital health technologies. Simultaneous localization and mapping (SLAM) methods will not only enable advanced cross reality (XR) applications but also enhance the navigation of autonomous objects such as vehicles and drones. Further in terrestrial networks and in non-terrestrial networks, the measured channel data and sensing and positioning data can be obtained by large bandwidth, new spectrum, dense network and more light-of-sight (LOS) links. Based on these data, a radio environmental map can be drawn through Al/ML methods, where channel information is linked, in the map, to its corresponding positioning, or environmental information, to, thereby, provide an enhanced physical layer design based on this map.

Sensing coordinators are nodes in a network that can assist in the sensing operation. These nodes can be stand-alone nodes dedicated to just sensing operations or other nodes (for example, the T-TRP 170, the ED 110, or a node in the core network 130) doing the sensing operations in parallel with communication transmissions. New protocol and signaling mechanism is needed so that the corresponding interface link can be performed with customized parameters to meet particular requirements while minimizing signaling overhead and maximizing the whole system spectrum efficiency.

AI/ML and sensing methods are data-hungry. In order to involve Al/ML and sensing in wireless communications, more and more data are needed to be collected, stored and exchanged. The characteristics of wireless data are known to expand to large ranges in multiple dimensions, *e.g*., from sub-6 GHz, millimeter to Terahertz carrier frequency, from space, outdoor to indoor scenario, and from text, voice to video. These data are collecting, processing and usage are performed in a unified framework or a different framework.

A terrestrial communication system may also be referred to as a land-based or ground-based communication system, although a terrestrial communication system can also, or instead, be implemented on or in water. The non-terrestrial communication system may bridge coverage gaps in underserved areas by extending the coverage of cellular networks through the use of non-terrestrial nodes, which will be key to establishing global, seamless coverage and providing mobile broadband services to unserved/underserved regions. In the current case, it is hardly possible to implement terrestrial access-points/base-stations infrastructure in areas like oceans, mountains, forests, or other remote areas.

The terrestrial communication system may be a wireless communications system using 5G technology and/or later generation wireless technology (*e.g*., 6G or later). In some examples, the terrestrial communication system may also accommodate some legacy wireless technologies (*e.g*., 3G or 4G wireless technology). The non-terrestrial communication system may be a communications system using satellite constellations, like conventional Geo-Stationary Orbit (GEO) satellites, which utilize broadcast public/popular contents to a local server. The non-terrestrial communication system may be a communications system using low earth orbit (LEO) satellites, which are known to establish a better balance between large coverage area and propagation path-loss/delay. The non-terrestrial communication system may be a communications system using stabilized satellites in very low earth orbits (VLEO) technologies, thereby substantially reducing the costs for launching satellites to lower orbits. The non-terrestrial communication system may be a communications system using high altitude platforms (HAPs), which are known to provide a low path-loss air interface for the users with limited power budget. The non-terrestrial communication system may be a communications system using Unmanned Aerial Vehicles (UAVs) (or unmanned aerial system, "UAS") achieving a dense deployment, since their coverage can be limited to a local area, such as airborne, balloon, quadcopter, drones, *etc.* In some examples, GEO satellites, LEO satellites, UAVs, HAPs and VLEOs may be horizontal and two-dimensional. In some examples, UAVs, HAPs and VLEOs may be coupled to integrate satellite communications to cellular networks. Emerging 3D vertical networks consist of many moving (other than geostationary satellites) and high altitude access points such as UAVs, HAPs and VLEOs.

MIMO technology allows an antenna array of multiple antennas to perform signal transmissions and receptions to meet high transmission rate requirements. The ED 110 and the T-TRP 170 and/or the NT-TRP may use MIMO to communicate using wireless resource blocks. MIMO utilizes multiple antennas at the transmitter to transmit wireless resource blocks over parallel wireless signals. It follows that multiple antennas may be utilized at the receiver. MIMO may beamform parallel wireless signals for reliable multipath transmission of a wireless resource block. MIMO may bond parallel wireless signals that transport different data to increase the data rate of the wireless resource block.

In recent years, a MIMO (large-scale MIMO) wireless communication system with the T-TRP 170 and/or the NT-TRP 172 configured with a large number of antennas has gained wide attention from academia and industry. In the large-scale MIMO system, the T-TRP 170, and/or the NT-TRP 172, is generally configured with more than ten antenna units (see antennas 256 and antennas 280 in FIG. 3). The T-TRP 170, and/or the NT-TRP 172, is generally operable to serve dozens (such as 40) of EDs 110. A large number of antenna units of the T-TRP 170 and the NT-TRP 172 can greatly increase the degree of spatial freedom of wireless communication, greatly improve the transmission rate, spectrum efficiency and power efficiency, and, to a large extent, reduce interference between cells. The increase of the number of antennas allows for each antenna unit to be made in a smaller size with a lower cost. Using the degree of spatial freedom provided by the large-scale antenna units, the T-TRP 170 and the NT-TRP 172 of each cell can communicate with many EDs 110 in the cell on the same time-frequency resource at the same time, thus greatly increasing the spectrum efficiency. A large number of antenna units of the T-TRP 170 and/or the NT-TRP 172 also enable each user to have better spatial directivity for uplink and downlink transmission, so that the transmitting power of the T-TRP 170 and/or the NT-TRP 172 and an ED 110 is reduced and the power efficiency is correspondingly increased. When the antenna number of the T-TRP 170 and/or the NT-TRP 172 is sufficiently large, random channels between each ED 110 and the T-TRP 170 and/or the NT-TRP 172 can approach orthogonality such that interference between cells and users and the effect of noise can be reduced. The plurality of advantages described hereinbefore enable large-scale MIMO to have a magnificent application prospect.

A MIMO system may include a receiver connected to a receive (Rx) antenna, a transmitter connected to transmit (Tx) antenna and a signal processor connected to the transmitter and the receiver. Each of the Rx antenna and the Tx antenna may include a plurality of antennas. For instance, the Rx antenna may have a uniform linear array (ULA) antenna, in which the plurality of antennas are arranged in line at even intervals. When a radio frequency (RF) signal is transmitted through the Tx antenna, the Rx antenna may receive a signal reflected and returned from a forward target.

A non-exhaustive list of possible unit or possible configurable parameters or in some embodiments of a MIMO system include: a panel; and a beam.

A panel is a unit of an antenna group, or antenna array, or antenna sub-array, which unit can control a Tx beam or a Rx beam independently.

A beam may be formed by performing amplitude and/or phase weighting on data transmitted or received by at least one antenna port. A beam may be formed by using another method, for example, adjusting a related parameter of an antenna unit. The beam may include a Tx beam and/or a Rx beam. The transmit beam indicates distribution of signal strength formed in different directions in space after a signal is transmitted through an antenna. The receive beam indicates distribution of signal strength that is of a wireless signal received from an antenna and that is in different directions in space. Beam information may include a beam identifier, or an antenna port(s) identifier, or a channel state information reference signal (CSI-RS) resource identifier, or a SSB resource identifier, or a sounding reference signal (SRS) resource identifier, or other reference signal resource identifier.

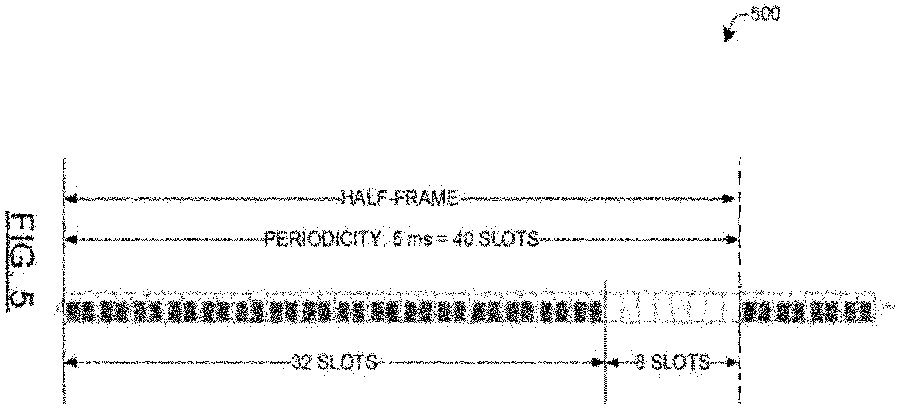

FIG. 5 illustrates a portion 500 of a radio frame, which includes 120 kHz SSB SCS. The radio frame has a 10 ms duration (80 slots in 120 kHz SCS). The first 40 slots of the portion 500 of the radio frame may be referenced as a "half frame." Each slot among the first 32 slots of the half frame may include two SSB candidates, *i.e*., SSBs. Taken together, the (up to) M=64 SSB candidates (*i.e*., 64 SSBs) make up an "SSB set." As discussed earlier, for 52.6+ GHz, M may be a larger value. These SSBs may each be transmitted with distinct properties and at pre-defined location within the SSB set. Additionally, each SSB may be associated with an SSB candidate index, which also may be called a candidate SSB index. As there is a one-to-one mapping between the candidate SSB index and the location of the corresponding transmitted SSB within the SSB set, the detected candidate SSB index, along with other information (*e.g*., a half frame bit, which indicates whether the SSB set is transmitted in the first half frame or second half frame) allows the UE 110 that receives the SSB to determine a boundary for the radio frame.

The properties that distinguish the SSBs from one another may be of several Quasi-Colocation (QCL) types. Properties of quasi co-location "typeA" (or, in short, "QCL-A") include Doppler shift, Doppler spread, average delay and delay spread. These properties are known to assist the UE 110 in obtaining channel state information (CSI). Properties of quasi co-location "typeD" (or, in short, "QCL-D") include spatial receive parameters. These properties are known to support beamforming at the UE 110.

SSB SCS of 120 kHz and 240 kHz are supported in FR2 in Rel-15 (see www.3gpp.org/release-15) and Rel-16 (see www.3gpp.org/release-16). The minimum periodicity of SSB in current NR specifications is 5 ms (half frame).

In the known portion 500 of the radio frame illustrated in FIG. 5, the SSB SCS is 120 kHz and the SSB periodicity is 5 ms. A SSB SCS is 120 kHz is the current, typical implementation in FR2. In the known portion 500 of the radio frame illustrated in FIG. 5, the distance between two SSBs with the same candidate SSB index (same QCL-A and QCL-D properties) in two consecutive SSB sets is 40 slots. Moreover, when all 64 SSBs are transmitted, the distance between the end of one SSB set and the beginning of the following SSB set is eight slots.

Supporting SSB SCS of 480 kHz and 960 kHz has been discussed for 5G NR Rel-17 (see www.3gpp.org/release-17). An SSB SCS of 1920 kHz, or even higher, is a possibility in 5G NR Rel-18 (see www.3gpp.org/release18) or later releases.

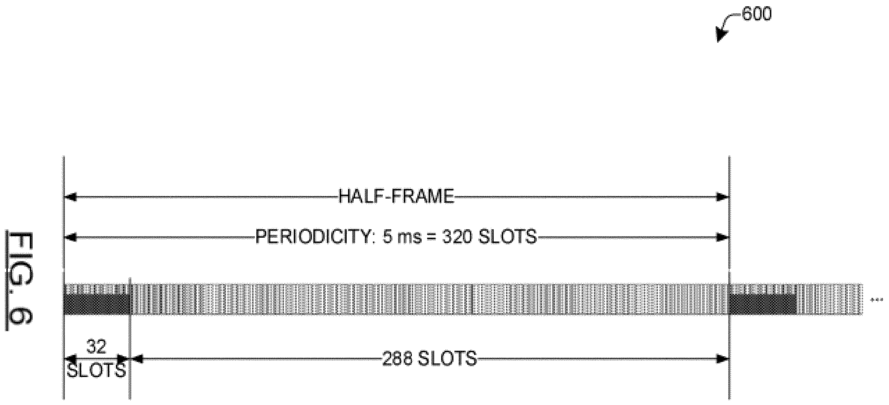

FIG. 6 illustrates an example portion 600 of a radio frame associated with a 960 kHz SSB SCS. The radio frame has a 10 ms (640 slot) duration. The first 320 slots of the example portion 600 of the radio frame are the half frame. Each slot among the first 32 slots of the half frame may include two SSBs.

Note, from the example of FIG. 6, that if the minimum periodicity remains as 5 ms for an SSB SCS of 960 kHz in, say, 5G NR Rel-17, or later NR releases, then the distance between two SSBs with the same candidate SSB index (QCL-A and QCL-D properties) in two consecutive SSB sets will be 320 slots. This is much higher than the 40 slots for 120 kHz SSB SCS (see FIG. 5). Moreover, when all 64 SSBs are transmitted, the distance between two consecutive SSB sets will be 288 slots. 288 slots is much higher than the eight slots for the 120 kHz SSB SCS example of FIG. 5. Such a wait time for the next SSB set (up to 320 slots when the SSB SCS is 960 kHz) may not be acceptable. For one example, the wait time may be unacceptable in the case of a UE 110 attempting to establish initial access. Furthermore, the wait time may be unacceptable in the case of a UE 110 that is in a state known as "RRC_CONNECTED." For the latter UE 110, it may be considered useful to obtain the timing of a neighboring cell for mobility measurement. The mobility measurement may, *e.g*., be SSB-based or be CSI-RS-based. The wait time may be especially unacceptable on the basis that higher SCS is typically used for delay-sensitive and high data rate purposes.

In embodiments of the present disclosure, in overview, it is proposed herein to reduce the minimum periodicity of SSB sets. As a consequence of reducing the minimum periodicity of SSB sets, a plurality of SSB sets can be present in a half frame rather than a single SSB set per half frame. Accordingly, it is proposed herein to use, at the transmitter side, additional bits (SSB location bits) to indicate a particular location for the SSB set within a half frame. It follows that, at the receiver side, the UE 110 is configured to, or implemented to, process a received SSB to obtain the SSB location bits. Therefore, the wait time is acceptable if the UE 110 is in the state known as "RRC_CONNECTED" or during initial access. Even for the case that higher SCS is typically used for delay-sensitive and high data rate purposes, the wait time is also low and could be acceptable.

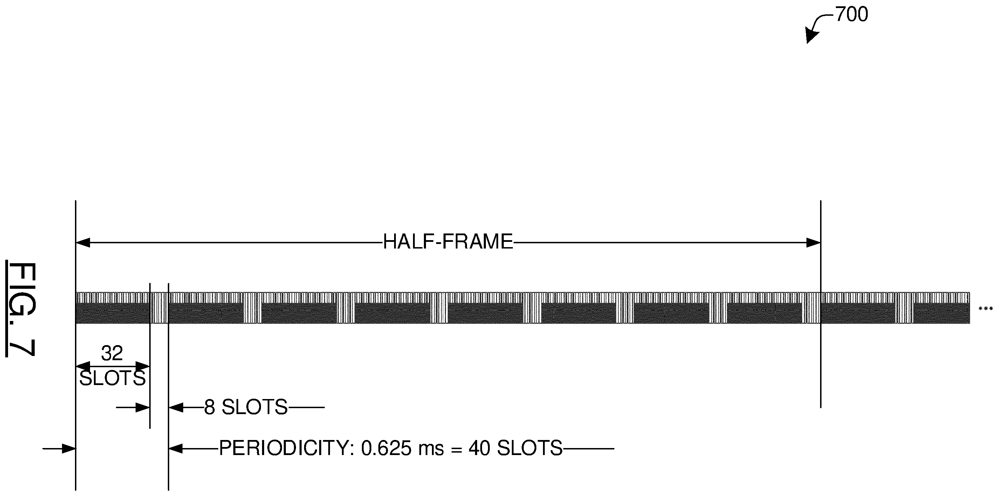

FIG. 7 illustrates a proposed portion 700 of a radio frame associated with a 960 kHz SSB SCS. The radio frame has a 10 ms (640 slot) duration. The first 320 slots of the proposed portion 700 of the radio frame are the half frame. In FIG. 6, a periodicity of 5 ms is used for the SSB sets. In FIG. 7, a periodicity of 0.625 ms is used for the SSB sets. As a consequence of the reduced periodicity, the proposed portion 700 of the radio frame illustrated in FIG. 7 includes eight SSB sets per half frame, which stands in contrast to the example portion 600 of the radio frame illustrated in FIG. 6, which example portion 600 includes one SSB set per half frame.

In the proposed portion 700 of the radio frame illustrated in FIG. 7, the distance between two SSBs with the same candidate SSB index (same QCL-A and QCL-D properties) in two consecutive SSB sets is 40 slots, which is the same distance (in terms of number of slots) found in the known portion 500 of the radio frame illustrated in FIG. 5. Moreover, when all 64 SSBs are transmitted, the distance between the end of one SSB set and the beginning of the following SSB set is eight slots, which is also the same distance (in terms of number of slots) found in the known portion 500 of the radio frame illustrated in FIG. 5.

In a situation, as illustrated in FIG. 7, wherein up to eight SSB sets can be included in each half frame, it is clear that the UE 110 that receives an SSB may not necessarily be allowed to accurately determine a boundary of the radio frame solely on the basis of the value of the half frame bit and the value of the candidate SSB index. Accordingly, it is proposed herein that further information be included in the SSB. The further information may be conveyed in the form of a number, *N*, of additional bits. These bits are referenced as "additional bits" on the basis that the half frame bit continues to be included in the SSB. The *N* additional bits may be referenced as "SSB location" (SSB-L) bits. Note that the additional *N* bits are required to allow the UE 110 to uniquely determine the SSB set location within the half frame if 2*^{N}* SSB sets can be transmitted in a half frame. SSB set location within the half frame in conjunction with the half frame bit and the detected candidate SSB index, allow the UE 110 to determine the radio frame boundary.

The embodiments of present disclosure provide that a network device may indicate less than half-frame SSB periodicity for higher SCS, for example, higher SSB periodicity than the SSB periodicity that is supported in Rel-15/16 NR. The receiver, for example, the UE, may obtain the radio frame boundary after decoding PBCH payload of the layer 1 signaling. The SSB periodicity for higher SCS may be indicated in different examples.

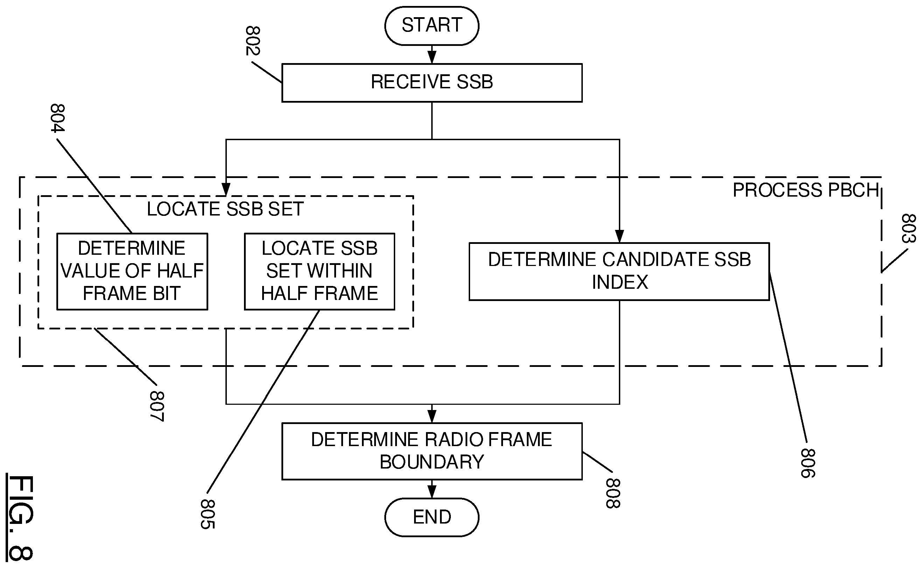

FIG. 8 illustrates example steps in a method, carried out at a UE 110, of determining a boundary for a radio frame. Initially, the UE 110 receives (step 802) an SSB. The UE 110 may then process the PBCH payload of the SSB. The processing of the PBCH payload allows the UE 110 to determine (step 806) a value for the candidate SSB index. The processing, by the UE 110, of the PBCH payload further allows the UE 110 to locate (step 807), within the radio frame, the SSB set of which the received SSB is a part. Locating (step 807) the SSB set involves determining (step 804) a value for the half frame bit. Locating (step 807) the SSB set also involves locating (step 805), within the half frame, the SSB set. In particular, the UE 110 may locate (step 805), within the half frame, the SSB set by determining the value of the SSB-L bits.

It is proposed to determine (step 806) the value for the candidate SSB index by 1) processing an index of a demodulation reference signal (DM-RS) sequence transmitted in the PBCH and 2) processing the PBCH payload. Notably, there is a one-to-one mapping between the index of the DM-RS and part of the candidate SSB index. Obtaining part of the candidate SSB index, on the basis of the one-to-one mapping between an index of the DM-RS sequence transmitted in the PBCH, is a part of a DM-RS PBCH detection process. The DM-RS PBCH detection process (not shown) is a step prior to the PBCH payload processing (step 803). It should be clear that determining the value for the candidate SSB index involves the DM-RS PBCH detection process (not shown) with the determining being completed in activity (step 806) within the PBCH payload processing (step 803). In contrast, the determining the half frame bit involves only activity (step 804) within the PBCH payload processing (step 803).

On the basis of the value of the half frame bit, the value of the SSB-L bits and the value of the candidate SSB index, the UE 110 may determine (step 808) a boundary for the radio frame.

In one embodiment, it is proposed herein to configure the TRP 170, 172 to indicate the SSB-L bits in the PBCH payload. In some examples, it may be a PBCH payload of a layer 1 signaling (PBCH payload generated by layer 1). Thus, the PBCH payload does not increase and could be compatible well with legacy devices.

To assist in the consideration of an appropriate manner of indicating the SSB-L bits in the PBCH payload, a review of the PBCH payload follows.

A broadcast control channel (BCCH) is carried on a broadcast channel (BCH). The BCH is transport channel that is used, in the downlink direction only, for transmitting the BCCH and, specifically, for transmitting a Master Information Block (MIB). The BCH transport channel is mapped on the PBCH.

The MIB is known to convey, to the UE 110, various parameters that allow the UE 110 to acquire a first system information block ("SIB1"). More specifically, the various parameters provide information that allows the UE 110 to monitor the physical downlink control channel (PDCCH) for scheduling of a physical downlink shared channel (PDSCH) that carries the SIB1.

As discussed hereinbefore, an SSB includes a PSS, an SSS and a PBCH. The so-called payload of the PBCH includes two portions: a first portion; and a second portion.

The first portion may be referenced in multiple ways. The first portion may be referenced as the bits representative of the contents of the MIB. The first portion may be referenced as PBCH payload bits in a transport block delivered to layer 1. The first portion may be referenced as PBCH payload bits generated by higher layers. The second portion may be referenced as additional, timing-related PBCH payload bits that are generated in layer 1 (or physical layer) or, more simply, PBCH payload bits that are generated in layer 1 (or physical layer).

According to practices, such as outlined in the 5G NR Technical Specification 38.331 (available from portal.3gpp.org), six bits of the first portion of the PBCH payload are reserved for indicating a system frame number (SFN).

The SFN ranges from 0 to 1023. The six most significant bits (MSB) of the 10-bit SFN are part of the first portion. The four least significant bits (LSB) of the SFN are conveyed in second portion of the PBCH payload.

According to known practices, one bit of the first portion is used for a value related to subcarrier spacing. This bit may be interpreted, by the UE 110, to indicate either 15 kHz SCS or 30 kHz SCS for FR1 and either 60 kHz SCS or 120 kHz SCS for FR2.

According to known practices, four or five bits of the PBCH payload are used for a field related to SSB Subcarrier Offset. This value, which is also called "*k_{SSB}*," represents a frequency domain offset between the SSB and the overall resource block grid, represented as a number of subcarriers. For reception of the SIB1, the UE 110 determines where the overall resource block grid starts. The SSB Subcarrier Offset field takes five bits for FR1 and four bits for FR2. For FR1, the UE 110 may obtain the four LSBs of *k_{SSB}* from the first portion and the UE 110 may obtain an additional bit (the MSB of *k_{SSB}*) from the second portion. In this case, the value of *k_{SSB}* may take on one of 24 values (0, 1, 2, ..., 23). For FR2, the UE 110 may obtain all four LSBs of *k_{SSB}* from the first portion. In this case, the value of *k_{SSB}* may take on one of 12 values (0, 1, 2, ..., 11).

The SSB Subcarrier Offset field may also indicate that the cell, as defined by the TRP 170, 172 that is transmitting the SSB, does not provide the SIB1 and that there is, accordingly, no CORESET#0 configured in the first portion.

According to known practices, the first portion includes an eight-bit field related to configuration of the PDCCH for the SIB1. In those cases wherein the cell associated with the source of the SSB does not provide the SIB1, the PDCCH configuration field may indicate particular frequency positions where the UE 110 may find an SSB with an associated SIB1 or the frequency range where the network does not provide SSBs with a SIB1. The UE 110 may determine, from the first portion, that a CORESET#0 is not present if *k_{SSB} >* 23 for FR1 or if *k_{SSB} >* 11 for FR2.

According to known practices, zero, one, two (for FR1) or three (for FR2) bits of the second portion are used to hold a candidate SSB index. The candidate SSB index of the particular SSB within an SSB set may be used by the UE 110 when attempting to achieve frame synchronization (determining a radio frame boundary). As discussed earlier, the maximum number of SSBs, *L̅ₘₐₓ,* can take different values. For instance, *L̅ₘₐₓ* can be 4, 8, 10 or 20 in FR1, depending on whether the frequency is less than or equal to 3 GHz or more than 3 GHz and depending on whether the operation is with shared spectrum channel access or without shared spectrum channel access. In turn, currently, *L̅ₘₐₓ* = 64 for FR2. For *L̅ₘₐₓ =* 4, a UE determines the 2 LSB bits of a candidate SSB index from a one-to-one mapping with an index of the DM-RS sequence transmitted in the PBCH. For *L̅ₘₐₓ* > 4, a UE determines the 3 LSB bits of a candidate SSB index from a one-to-one mapping with an index of the DM-RS sequence transmitted in the PBCH. Further, if *L̅ₘₐₓ* = 10, the UE determines the 1 MSB bit of the candidate SSB index from the second portion of PBCH payload. If *L̅ₘₐₓ* = 20, the UE determines the 2 MSB bits of the candidate SSB index from the second portion of PBCH payload. If *L̅ₘₐₓ* = 64, the UE determines the 3 MSB bits of the candidate SSB index from the second portion of PBCH payload.

According to known practices, one bit of the PBCH payload is reserved for the half frame indication. The half frame bit is set to zero when the SSB is transmitted in the first half frame of the 10 ms radio frame. The half frame bit is set to one when the SSB is transmitted in the second half frame of the 10 ms radio frame. The half frame bit, together with the candidate SSB index, may be used, by the UE 110, to determine a boundary of the radio frame.

Recall that it is proposed herein to configure the TRP 170, 172 to indicate the SSB-L bits in the PBCH payload.

According to aspects of the present application, it is proposed to append the N SSB-L bits to the second portion of the PBCH payload to facilitate the UE to determine the radio frame boundary when up to 2*^{N}* SSB sets can be transmitted within a half frame. The second portion of the PBCH payload is known to have eight bits. It follows that, according to these aspects, the second portion of the PBCH payload is expanded from eight bits to 8 + *N* bits. Conveniently, according to these aspects, the first portion of the PBCH payload remains unchanged. In particular, in a manner similar to 5G NR Rel-15/16, the first portion remains unchanged over the 80 ms time period.

According to further aspects of the present application, it is proposed to insert the *N* SSB-L bits into the second portion of the PBCH payload. As discussed hereinbefore, the second portion of the PBCH payload is defined to include the four LSB of the SFN. According to these aspects of the present application, it is proposed to displace *N* bits of the four LSB of the SFN and, in place of the displaced SFN bits, insert the *N* SSB-L bits. According to these aspects of the present application, it is proposed to add the *N* displaced SFN bits to the first portion of the PBCH payload.

Generally, the 4^{th} LSB, 3^{rd} LSB,..., 4-N+1 LSB of the SFN are to be displaced. Specifically, when *N* = 1, only the 4^{th} LSB is displaced from the second portion. The 4^{th} LSB is added to the first portion. When *N* = 2, the 4^{th} LSB and the 3^{rd} LSB are displaced from the second portion. The 4^{th} LSB and the 3^{rd} LSB are added to the first portion. When *N* = 3, the 4^{th} LSB, the 3^{rd} LSB and the 2^{nd} LSB are displaced from the second portion. The 4^{th} LSB, the 3^{rd} LSB and the 2^{nd} LSB are added to the first portion. When *N* = 4, all four SFN LSB are displaced from the second portion. All four SFN LSB are added to the first portion.

The first portion of the PBCH payload is known to be defined have 24 bits. It follows that, according to these aspects, the first portion of the PBCH payload is expanded from 24 bits to 24 + *N* bits. Conveniently, according to these aspects, the length (eight bits) of the second portion of the PBCH payload remains unchanged, even though the content of the second portion is changed.

According to further aspects of the present application, it is proposed to insert the N SSB-L bits into the second portion of the PBCH payload. As discussed hereinbefore, the second portion of the PBCH payload is defined to include the four LSB of the SFN. According to these aspects of the present application, it is proposed to displace N bits of the four LSB of the SFN and, in place of the displaced SFN bits, insert the N SSB-L bits. According to these aspects of the present application, it is proposed to insert the N displaced SFN bits into the first portion of the PBCH payload. It has been discussed hereinbefore that the first portion of the PBCH payload is defined to include six SFN bits. According to these aspects of the present application, it is proposed to insert the N displaced SFN bits in among the six SFN bits while displacing the *N* MSB of the SFN. It is further proposed to insert the displaced *N* MSB of the SFN into the SIB1.

Generally, the 4^{th} LSB, 3^{rd} LSB,..., 4-N+1 LSB of the SFN are to be displaced. Specifically, when *N* = 1, only the 4^{th} LSB is displaced from the second portion. The 4^{th} LSB is inserted among the SFN bits in the first portion, thereby displacing the 1^{st} MSB from the first portion. The 1^{st} MSB is inserted into the SIB1. When *N* = 2, the 4^{th} LSB and the 3^{rd} LSB are displaced from the second portion. The 4^{th} LSB and the 3^{rd} LSB are inserted among the SFN bits in the first portion, thereby displacing the 1^{st} MSB and the 2^{nd} MSB from the first portion. The 1^{st} MSB and the 2^{nd} MSB are inserted into the SIB1. When *N* = 3, the 4^{th} LSB, the 3^{rd} LSB and the 2^{nd} LSB are displaced from the second portion. The 4^{th} LSB, the 3^{rd} LSB and the 2^{nd} LSB are inserted among the SFN bits in the first portion, thereby displacing the 1^{st} MSB, the 2^{nd} MSB and the 3^{rd} MSB from the first portion. The 1^{st} MSB, the 2^{nd} MSB and the 3^{rd} MSB are inserted into the SIB1. When *N* = 4, all four SFN LSB are displaced from the second portion. All four SFN LSB are inserted among the SFN bits in the first portion, thereby displacing the 1^{st} MSB, the 2^{nd} MSB, the 3^{rd} MSB and the 4^{th} MSB from the first portion. The 1^{st} MSB, the 2^{nd} MSB, the 3^{rd} MSB and the 4^{th} MSB are inserted into the SIB1.

Conveniently, both portions of the PBCH payload remain the same length, in bits, as defined in 5G NR Rel-15/16 NR.

According to still further aspects of the present application, it is again proposed to insert the *N* SSB-L bits into the second portion of the PBCH payload. As discussed hereinbefore, the second portion of the PBCH payload is defined to include the four LSB of the SFN. According to these aspects of the present application, it is proposed to displace *N* bits of the four LSB of the SFN and, in place of the displaced SFN bits, insert the *N* SSB-L bits. According to these aspects of the present application, it is proposed to insert at least some of the *N* displaced SFN bits into the first portion of the PBCH payload. It has been discussed hereinbefore that the first portion of the PBCH payload is defined to include six SFN bits. According to these aspects of the present application, it is proposed to insert at least some of the *N* displaced SFN bits in among the six SFN bits while displacing N consecutive bits of the SFN. It is further proposed to insert the displaced *N* consecutive bits of the SFN into the SIB1.

Generally, the 4^{th} LSB, 3^{rd} LSB,..., 4-N+1 LSB of the SFN are to be displaced. Specifically, when *N* = 1, only the 4^{th} LSB is displaced from the second portion. The 4^{th} LSB may be inserted among the SFN bits in the first portion, thereby displacing one of the six MSB from the first portion. The one of the six MSB may then be inserted into the SIB1. Alternatively, the 4^{th} LSB may be inserted into the SIB1.

When *N* = 2, the 4^{th} LSB and the 3^{rd} LSB are displaced from the second portion. The 4^{th} LSB and the 3^{rd} LSB may be inserted among the SFN bits in the first portion, thereby displacing two consecutive bits of the six MSBs from the first portion. The two consecutive displaced bits of the six MSBs may be inserted into the SIB1. Alternatively, the 4^{th} LSB and the 3^{rd} LSB may be inserted into the SIB1. Further alternatively, the 5^{th} LSB may be displaced from the first portion such that the 5^{th} LSB and the 4^{th} LSB are inserted into the SIB1 while the 3^{rd} LSB is inserted into the first portion.

When *N* = 3, the 4^{th} LSB, the 3^{rd} LSB and the 2^{nd} LSB are displaced from the second portion. The 4^{th} LSB, the 3^{rd} LSB and the 2^{nd} LSB may be inserted among the SFN bits in the first portion, thereby displacing the three consecutive bits of the six MSBs from the first portion. The three consecutive displaced bits of the six MSBs may be inserted into the SIB1. Alternatively, the 4^{th} LSB, the 3^{rd} LSB and the 2^{nd} LSB may be inserted into the SIB1. Further alternatively, the 6^{th} LSB and 5^{th} LSB may be displaced from the first portion such that the 6^{th} LSB, the 5^{th} LSB and the 4^{th} LSB are inserted into the SIB1 while the 3^{rd} LSB and the 2^{nd} LSB are inserted into the first portion. Even further alternatively, the 5^{th} LSB may be displaced from the first portion such that the 5^{th} LSB, the 4^{th} LSB and the 3^{rd} LSB are inserted into the SIB1 while the 2^{nd} LSB is inserted into the first portion.

When *N* = 4, all four SFN LSB are displaced from the second portion. All four SFN LSB may be inserted among the SFN bits in the first portion, thereby displacing four consecutive MSBs from the first portion. The four consecutive displaced MSBs may be inserted into the SIB1. Alternatively, the 5^{th} LSB may be displaced from the first portion such that the 5^{th} LSB, the 4^{th} LSB, the 3^{rd} LSB and the 2^{nd} LSB may be inserted into the SIB1 while the 1^{st} LSB is inserted into the first portion. Further alternatively, the 6^{th} LSB and 5^{th} LSB may be displaced from the first portion such that the 6^{th} LSB, the 5^{th} LSB, the 4^{th} LSB and the 3^{rd} LSB are inserted into the SIB1 while the 2^{nd} LSB and the 1^{st} LSB are inserted into the first portion. Even further alternatively, the 7^{th} LSB, the 6^{th} LSB and the 5^{th} LSB may be displaced from the first portion such that the 7^{th} LSB, the 6^{th} LSB, the 5^{th} LSB and the 4^{th} LSB are inserted into the SIB1 while the 3^{rd} LSB, the 2^{nd} LSB and the 1^{st} LSB are inserted into the first portion.

Note that there is no scenario wherein the 1^{st} LSB is inserted into the SIB1.

The existence of the 1^{st} LSB in the first portion allows the UE 110 to determine whether the SFN is odd or even. The odd/even information allows the UE 110 to obtain PDCCH monitoring occasions for a so-called Type0-PDCCH CSS set when the known SSB and CORESET multiplexing pattern 1 is used.

Conveniently, both portions of the PBCH payload remain the same length, in bits, as defined in 5G NR Rel-15/16 NR.

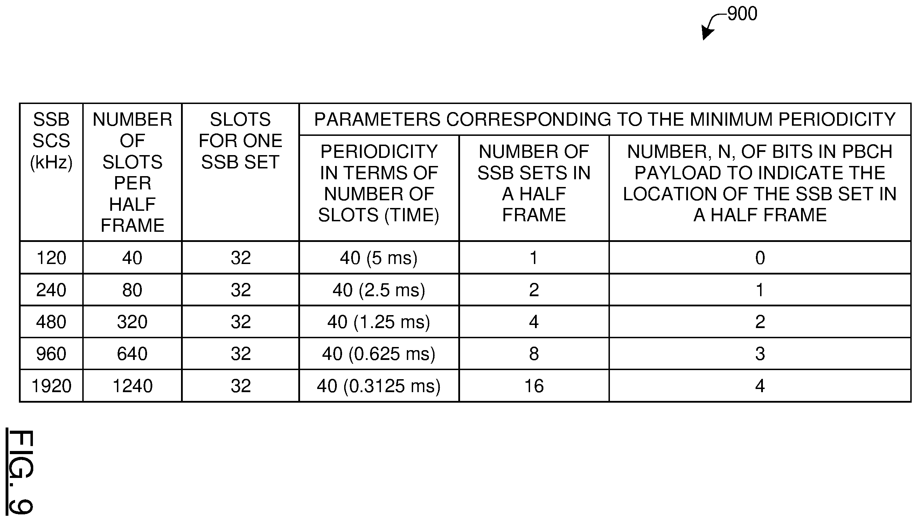

FIG. 9 illustrates a table 900 that may be useful for establishing the number, *N*, referenced hereinbefore as the number of bits to include in the PBCH payload to indicate the location of the SSB set within a given half frame. The number, *N*, is related, in the table 900 in FIG. 9, to the SSB SCS. The parameters illustrated in the table 900 of FIG. 9 relate to a configuration wherein there are *L̅ₘₐₓ* = 64 SSBs blocks and a configuration wherein there can be two SSBs per slot. The table row associated with an SSB SCS of 120 kHz corresponds to the known portion 500 of the radio frame illustrated in FIG. 5 and, accordingly, the appropriate value for N is zero. The table row associated with an SSB SCS of 960 kHz corresponds to the proposed portion 700 of the radio frame illustrated in FIG. 7 and, accordingly, the appropriate value for *N* is three.

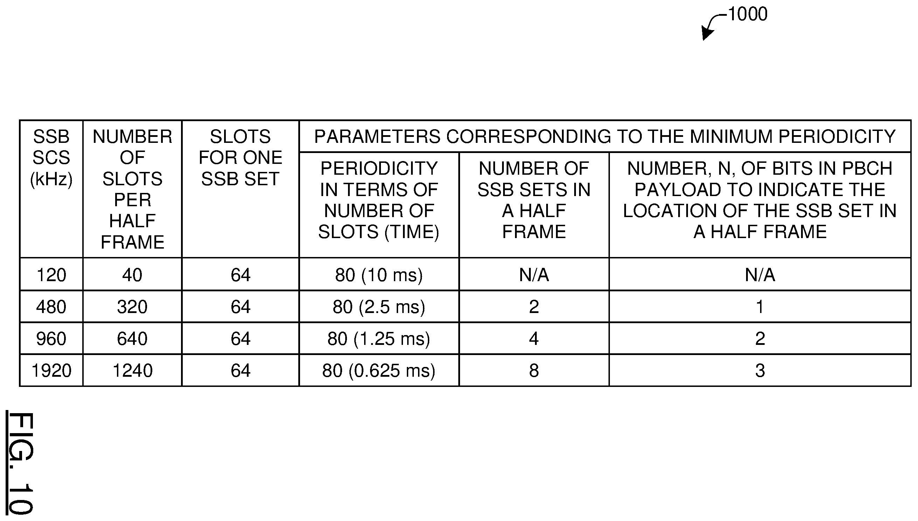

FIG. 10 illustrates a table 1000 that may be useful for establishing the number, *N*, referenced hereinbefore as the number of bits to include in the PBCH payload to indicate the location of the SSB set within a given half frame. The number, *N*, is related, in the table 1000 in FIG. 10, to the SSB SCS.

The parameters illustrated in the table 1000 of FIG. 10 relate to a configuration wherein there are 64 SSBs and wherein there can be only one SSB per slot. The parameters illustrated in the table 1000 of FIG. 10 also relates to a configuration wherein there are *L̅ₘₐₓ* = 64 SSBs and wherein there can be two SSBs in one slot and no SSBs in the subsequent slot or, alternatively, 1 SSB in each slot. The parameters illustrated in the table 1000 of FIG. 10 also relates to a configuration wherein there are *L̅ₘₐₓ* = 128 SSBs and wherein there can be two SSBs per slot.

The table row associated with an SSB SCS of 120 kHz corresponds to no known radio frame, accordingly, there is no appropriate value for *N*. The table row associated with an SSB SCS of 960 kHz indicates that four SSB sets may fit into a half frame once the periodicity has been reduced, relative to known configurations, to 1.25 ms and, accordingly, the appropriate value for *N* is two.

In some examples above, the *N* SSB-L bits and the 1 half frame bit may each be a separate Information Element (IE) or field or a parameter in the PBCH payload. In other examples, *N* + 1 bits may be indicated in a single IE or a field or a parameter in the PBCH payload *N* bits of which corresponding to the SSB-L bits and one remaining bit corresponding to the half frame bit.

It should be appreciated that one or more steps of the embodiment methods provided herein may be performed by corresponding units or modules. For example, data may be transmitted by a transmitting unit or a transmitting module. Data may be received by a receiving unit or a receiving module. Data may be processed by a processing unit or a processing module. The respective units/modules may be hardware, software, or a combination thereof. For instance, one or more of the units/modules may be an integrated circuit, such as field programmable gate arrays (FPGAs) or application-specific integrated circuits (ASICs). It will be appreciated that where the modules are software, they may be retrieved by a processor, in whole or part as needed, individually or together for processing, in single or multiple instances as required, and that the modules themselves may include instructions for further deployment and instantiation.

Although a combination of features is shown in the illustrated embodiments, not all of them need to be combined to realize the benefits of various embodiments of this disclosure. In other words, a system or method designed according to an embodiment of this disclosure will not necessarily include all of the features shown in any one of the Figures or all of the portions schematically shown in the Figures. Moreover, selected features of one example embodiment may be combined with selected features of other example embodiments.

Although this disclosure has been described with reference to illustrative embodiments, this description is not intended to be construed in a limiting sense. Various modifications and combinations of the illustrative embodiments, as well as other embodiments of the disclosure, will be apparent to persons skilled in the art upon reference to the description. The invention is defined by the appended claims.

## Claims

1. A method of synchronizing with a transmitter performed by an electronic device, comprising:
receiving (802), from the transmitter, a particular synchronization signal/physical broadcast channel, SS/PBCH, block, SSB, where the particular SSB is included among a plurality of SSBs in a particular SSB set in a radio frame, where each SSB of the plurality of SSBs is associated with an SSB candidate index, and where there is a one-to-one mapping between the candidate SSB index and a location of the corresponding SSB of the plurality of SSBs, the radio frame including two half frames, the two half frames comprising a first half frame and a second half frame, and where a PBCH payload of the particular SSB comprises a first portion and a second portion, where the first portion is referenced as PBCH payload bits generated by higher layers and where the second portion is referenced as PBCH payload bits that are generated in layer 1, where the second portion comprises N SSB location, SSB-L, bits that have been inserted in place of N bits of four least significant bits, LSB, of a system frame number, SFN, and the first portion comprises the N bits of the four LSB of the SFN that were displaced from the second portion;
processing the PBCH payload of the particular SSB to determine (806) a value of a particular candidate SSB index, where the particular candidate SSB index is the SSB candidate index of the particular SSB;
processing the PBCH payload of the particular SSB to locate (807), within the radio frame, the particular SSB, the locating comprising:
determining (804) a value of a half frame bit, where the value of the half frame bit indicates whether a half frame of the two half frames the particular SSB set is transmitted in is the first half frame or is the second half frame, and
locating (805), within the half frame of the two half frames, the particular SSB, the locating the particular SSB comprising determining a value of the SSB-L bits; and
determining (808), based on the value of the half frame bit, the value of the SSB-L bits, and the value of the particular candidate SSB index, a boundary for the radio frame.

2. The method of claim 1, further comprising determining a value of a SFN for the radio frame in accordance with the particular SSB.

3. The method of claim 2, wherein the determining the value of the SFN comprises processing a predetermined number of a PBCH payload bits representative of least significant bits of the SFN in the second portion of the PBCH payload.

4. The method of claim 3, wherein the determining the value of the SFN comprises:
processing a predetermined number of PBCH payload in the first portion of the PBCH payload to obtain most significant SFN bits;
processing the PBCH payload bits in the second portion of the PBCH payload to obtain least significant SFN bits; and
processing a further SFN bit appended to the PBCH payload bits in the first portion of the PBCH payload.

5. The method of claim 3, wherein the determining the value of the SFN comprises:
processing a predetermined number of PBCH payload bits in the first portion of the PBCH payload;
processing the PBCH payload bits in the second portion of the PBCH payload to obtain least significant SFN bits; and
processing a system information block.

6. The method of claim 5, wherein the processing the system information block comprises obtaining most significant SFN bits.

7. An electronic device comprising:
a receiver configured to receive a synchronization signal/physical broadcast channel, SS/PBCH, block, SSB, where the particular SSB is included among a plurality of SSBs in a particular SSB set in a radio frame, where each SSB of the plurality of SSBs is associated with an SSB candidate index, and where there is a one-to-one mapping between the candidate SSB index and a location of the corresponding SSB of the plurality of SSBs, the radio frame including two half frames, the two half frames comprising a first half frame and a second half frame, and where a PBCH payload of the particular SSB comprises a first portion and a second portion, where the first portion is referenced as PBCH payload bits generated by higher layers and where the second portion is referenced as PBCH payload bits that are generated in layer 1, where the second portion comprises N SSB location, SSB-L bits that have been inserted in place of N bits of four least significant bits, LSB, of a system frame number, SFN, and the first portion comprises the N bits of the four LSB of the SFN that were displaced from the second portion;
a processor configured to:
process the PBCH payload of the particular SSB to determine (806) a value of a particular candidate SSB index, where the particular candidate SSB index is the SSB candidate index of the particular SSB;
process the PBCH payload of the particular SSB to locate (807), within the radio frame, the particular SSB, the locating comprising:
determining (804) a value of a half frame bit, where the value of the half frame bit indicates whether a half frame of the two half frames the particular SSB set is transmitted in is the first half frame or is the second half frame, and
locating (805), within the half frame of the two half frames, the particular SSB, the locating the particular SSB comprising determining a value of the SSB-L bits;
and
determine, based on the value of the half frame bit, the value of the SSB-L bits, and the value of the particular candidate SSB index, a boundary for the radio frame.

8. The electronic device of claim 7, wherein the processor is further configured to determine a value of a SFN for the radio frame in accordance with the particular SSB.

9. The electronic device of claim 8, wherein the processor is further configured to determine the value of the SFN by processing a predetermined number of PBCH payload bits representative of least significant bits of the SFN in the second portion of the PBCH payload.

10. A computer-readable medium storing instructions which, when executed by a computer, cause the computer to carry out the method of any one of claims 1 to 6.

11. A communication system comprising an electronic device performing the method of any one claims 1 to 6 and a transmitter.

## Patentansprüche

1. Verfahren zum Synchronisieren mit einem Sender, das durch eine elektronische Vorrichtung durchgeführt wird, umfassend:
Empfangen (802), von dem Sender, eines bestimmten Blocks eines Synchronisationssignals / physischen Übertragungskanals, SS/PBCH, SSB, wobei der bestimmte SSB in einer Vielzahl von SSBs in einem bestimmten SSB-Satz in einem Funkrahmen beinhaltet ist, wobei jeder SSB der Vielzahl von SSBs mit einem SSB-Kandidatenindex verknüpft ist und wobei eine Eins-zu-eins-Zuordnung zwischen dem Kandidaten-SSB-Index und einem Standort des entsprechenden SSB der Vielzahl von SSBs besteht, wobei der Funkrahmen zwei Halbrahmen beinhaltet, die zwei Halbrahmen einen ersten Halbrahmen und einen zweiten Halbrahmen umfassen und wobei eine PBCH-Nutzlast des bestimmten SSB einen ersten Abschnitt und einen zweiten Abschnitt umfasst, wobei der erste Abschnitt als PBCH-Nutzlast-Bits, die durch höhere Schichten erzeugt werden, bezeichnet wird und wobei der zweite Abschnitt als PBCH-Nutzlast-Bits, die in Schicht 1 erzeugt werden, bezeichnet wird, wobei der zweite Abschnitt N SSB-Standort-Bits, SSB-L-Bits, umfasst, die anstelle von N Bits von vier niedrigstwertigen Bits, LSB, einer Systemrahmennummer, SFN, eingefügt wurden, und der erste Abschnitt die N Bits der vier LSB der SFN, die aus dem zweiten Abschnitt verdrängt wurden, umfasst;
Verarbeiten der PBCH-Nutzlast des bestimmten SSB, um einen Wert eines bestimmten Kandidaten-SSB-Index zu bestimmen (806), wobei der bestimmte Kandidaten-SSB-Index der SSB-Kandidatenindex des bestimmten SSB ist;
Verarbeiten der PBCH-Nutzlast des bestimmten SSB, um innerhalb des Funkrahmens den bestimmten SSB zu lokalisieren (807), wobei das Lokalisieren Folgendes umfasst:
Bestimmen (804) eines Wertes eines Halbrahmenbits, wobei der Wert des Halbrahmenbits angibt, ob ein Halbrahmen der zwei Halbrahmen, in denen der bestimmte SSB-Satz gesendet wird, der erste Halbrahmen ist oder der zweite Halbrahmen ist, und
Lokalisieren (805), innerhalb des Halbrahmens der zwei Halbrahmen, des bestimmten SSB, wobei das Lokalisieren des bestimmten SSB Bestimmen eines Werts der SSB-L-Bits umfasst; und
Bestimmen (808), basierend auf dem Wert des Halbrahmenbits, dem Wert der SSB-L-Bits und dem Wert des bestimmten Kandidaten-SSB-Index, einer Grenze für den Funkrahmen.

2. Verfahren nach Anspruch 1, ferner umfassend Bestimmen eines Werts einer SFN für den Funkrahmen gemäß dem bestimmten SSB.

3. Verfahren nach Anspruch 2, wobei das Bestimmen des Werts der SFN Verarbeiten einer vorgegebenen Anzahl von PBCH-Nutzlast-Bits, die repräsentativ sind für niedrigstwertige Bits der SFN in dem zweiten Abschnitt der PBCH-Nutzlast, umfasst.

4. Verfahren nach Anspruch 3, wobei das Bestimmen des Werts der SFN Folgendes umfasst:
Verarbeiten einer vorgegebenen Anzahl von PBCH-Nutzlast in dem ersten Abschnitt der PBCH-Nutzlast, um höchstwertige SFN-Bits zu erlangen;
Verarbeiten der PBCH-Nutzlast-Bits in dem zweiten Abschnitt der PBCH-Nutzlast, um niedrigstwertige SFN-Bits zu erlangen; und
Verarbeiten eines weiteren SFN-Bits, das an die PBCH-Nutzlast-Bits in dem ersten Abschnitt der PBCH-Nutzlast angehängt wird.

5. Verfahren nach Anspruch 3, wobei das Bestimmen des Werts der SFN Folgendes umfasst:
Verarbeiten einer vorgegebenen Anzahl von PBCH-Nutzlast-Bits in dem ersten Abschnitt der PBCH-Nutzlast;
Verarbeiten der PBCH-Nutzlast-Bits in dem zweiten Abschnitt der PBCH-Nutzlast, um niedrigstwertige SFN-Bits zu erlangen; und Verarbeiten eines Systeminformationsblocks.

6. Verfahren nach Anspruch 5, wobei das Verarbeiten des Systeminformationsblocks Erlangen höchstwertiger SFN-Bits umfasst.

7. Elektronische Vorrichtung, umfassend:
einen Empfänger, der dazu konfiguriert ist, einen Block eines Synchronisationssignals / physischen Übertragungskanals, SS/PBCH, SSB, zu empfangen, wobei der bestimmte SSB in einer Vielzahl von SSBs in einem bestimmten SSB-Satz in einem Funkrahmen beinhaltet ist, wobei jeder SSB der Vielzahl von SSBs mit einem SSB-Kandidatenindex verknüpft ist und wobei eine Eins-zu-eins-Zuordnung zwischen dem Kandidaten-SSB-Index und einem Standort des entsprechenden SSB der Vielzahl von SSBs besteht, wobei der Funkrahmen zwei Halbrahmen beinhaltet, die zwei Halbrahmen einen ersten Halbrahmen und einen zweiten Halbrahmen umfassen und wobei eine PBCH-Nutzlast des bestimmten SSB einen ersten Abschnitt und einen zweiten Abschnitt umfasst, wobei der erste Abschnitt als PBCH-Nutzlast-Bits, die durch höhere Schichten erzeugt werden, bezeichnet wird und wobei der zweite Abschnitt als PBCH-Nutzlast-Bits, die in Schicht 1 erzeugt werden, bezeichnet wird, wobei der zweite Abschnitt N SSB-Standort-Bits, SSB-L-Bits, umfasst, die anstelle von N Bits von vier niedrigstwertigen Bits, LSB, einer Systemrahmennummer, SFN, eingefügt wurden, und der erste Abschnitt die N Bits der vier LSB der SFN, die aus dem zweiten Abschnitt verdrängt wurden, umfasst;
einen Prozessor, der zu Folgendem konfiguriert ist:
Verarbeiten der PBCH-Nutzlast des bestimmten SSB, um einen Wert eines bestimmten Kandidaten-SSB-Index zu bestimmen (806), wobei der bestimmte Kandidaten-SSB-Index der SSB-Kandidatenindex des bestimmten SSB ist;
Verarbeiten der PBCH-Nutzlast des bestimmten SSB, um innerhalb des Funkrahmens den bestimmten SSB zu lokalisieren (807), wobei das Lokalisieren Folgendes umfasst:
Bestimmen (804) eines Wertes eines Halbrahmenbits, wobei der Wert des Halbrahmenbits angibt, ob ein Halbrahmen der zwei Halbrahmen, in denen der bestimmte SSB-Satz gesendet wird, der erste Halbrahmen ist oder der zweite Halbrahmen ist, und
Lokalisieren (805), innerhalb des Halbrahmens der zwei Halbrahmen, des bestimmten SSB, wobei das Lokalisieren des bestimmten SSB Bestimmen eines Werts der SSB-L-Bits umfasst;
und
Bestimmen, basierend auf dem Wert des Halbrahmenbits, dem Wert der SSB-L-Bits und dem Wert des bestimmten Kandidaten-SSB-Index, einer Grenze für den Funkrahmen.

8. Elektronische Vorrichtung nach Anspruch 7, wobei der Prozessor ferner dazu konfiguriert ist, einen Wert einer SFN für den Funkrahmen gemäß dem bestimmten SSB zu bestimmen.

9. Elektronische Vorrichtung nach Anspruch 8, wobei der Prozessor ferner dazu konfiguriert ist, den Wert der SFN durch Verarbeiten einer vorgegebenen Anzahl von PBCH-Nutzlast-Bits zu bestimmen, die repräsentativ sind für niedrigstwertige Bits der SFN in dem zweiten Abschnitt der PBCH-Nutzlast.

10. Computerlesbares Medium, das Anweisungen speichert, die, wenn sie durch einen Computer ausgeführt werden, den Computer dazu veranlassen, das Verfahren nach einem der Ansprüche 1 bis 6 umzusetzen.

11. Kommunikationssystem, umfassend eine elektronische Vorrichtung, die das Verfahren nach einem der Ansprüche 1 bis 6 durchführt, und einen Sender.

## Revendications

1. Procédé de synchronisation avec un émetteur réalisé par un dispositif électronique, comprenant :
la réception (802), en provenance de l'émetteur, d'un bloc de signaux de synchronisation, SSB, particulier/canaux de diffusion physique, SS/PBCH, où le SSB particulier est compris parmi une pluralité de SSB d'un ensemble SSB particulier d'une trame radio, où chaque SSB de la pluralité de SSB est associé à un indice candidat SSB, et où il existe un mappage biunivoque entre l'indice SSB candidat et un emplacement du SSB correspondant parmi la pluralité de SSB, la trame radio comportant deux demi-trames, les deux demi-trames comprenant une première demi-trame et une seconde demi-trame, et où une charge utile PBCH du SSB particulier comprend une première partie et une seconde partie, où la première partie est référencée comme bits de charge utile PBCH générés par les couches supérieures et où la seconde partie est référencée comme bits de charge utile PBCH générés dans la couche 1, où la seconde partie comprend N bits d'emplacement SSB, SSB-L, insérés à la place de N bits des quatre bits les moins significatifs, LSB, d'un numéro de trame système, SFN, et la première partie comprend les N bits des quatre LSB du SFN qui ont été déplacés à partir de la seconde partie ;
le traitement de la charge utile PBCH du SSB particulier afin de déterminer (806) une valeur d'un indice SSB candidat particulier, où l'indice SSB candidat particulier est l'indice candidat SSB du SSB particulier ;
le traitement de la charge utile PBCH du SSB particulier afin de localiser (807), dans la trame radio, le SSB particulier, la localisation comprenant :
la détermination (804) d'une valeur d'un bit de demi-trame, où la valeur du bit de demi-trame indique si une demi-trame des deux demi-trames dans lesquelles l'ensemble SSB particulier est transmis est la première demi-trame ou est la seconde demi-trame, et
la localisation (805), dans la demi-trame des deux demi-trames, du SSB particulier, la localisation du SSB particulier comprenant la détermination d'une valeur des bits SSB-L ; et
la détermination (808), sur la base de la valeur du bit de demi-trame, de la valeur des bits SSB-L et de la valeur de l'indice SSB candidat particulier, d'une limite pour la trame radio.

2. Procédé selon la revendication 1, comprenant également la détermination d'une valeur d'un SFN pour la trame radio selon le SSB particulier.

3. Procédé selon la revendication 2, dans lequel la détermination de la valeur du SFN comprend le traitement d'un nombre prédéterminé de bits d'une charge utile PBCH représentatifs des bits les moins significatifs du SFN dans la seconde partie de la charge utile PBCH.

4. Procédé selon la revendication 3, dans lequel la détermination de la valeur du SFN comprend :
le traitement d'un nombre prédéterminé de charges utiles PBCH dans la première partie de la charge utile PBCH pour obtenir les bits SFN les plus significatifs ;
le traitement des bits de charge utile PBCH dans la seconde partie de la charge utile PBCH pour obtenir les bits SFN les moins significatifs ; et
le traitement d'un autre bit SFN ajouté aux bits de charge utile PBCH dans la première partie de la charge utile PBCH.

5. Procédé selon la revendication 3, dans lequel la détermination de la valeur du SFN comprend :
le traitement d'un nombre prédéterminé de bits de charge utile PBCH dans la première partie de la charge utile PBCH ;
le traitement des bits de charge utile PBCH dans la seconde partie de la charge utile PBCH pour obtenir les bits SFN les moins significatifs ; et
le traitement d'un bloc d'informations système.

6. Procédé selon la revendication 5, dans lequel le traitement du bloc d'informations système comprend l'obtention des bits SFN les plus significatifs.

7. Dispositif électronique, comprenant :
un récepteur configuré pour recevoir un bloc de signaux de synchronisation, SSB/canaux de diffusion physique, SS/PBCH, où le SSB particulier est compris parmi une pluralité de SSB d'un ensemble SSB particulier d'une trame radio, où chaque SSB de la pluralité de SSB est associé à un indice candidat SSB, et où il existe un mappage biunivoque entre l'indice SSB candidat et un emplacement du SSB correspondant parmi la pluralité de SSB, la trame radio comportant deux demi-trames, les deux demi-trames comprenant une première demi-trame et une seconde demi-trame, et où une charge utile PBCH du SSB particulier comprend une première partie et une seconde partie, où la première partie est référencée comme bits de charge utile PBCH générés par les couches supérieures et où la seconde partie est référencée comme bits de charge utile PBCH générés dans la couche 1, où la seconde partie comprend N bits d'emplacement SSB, SSB-L, insérés à la place de N bits des quatre bits les moins significatifs, LSB, d'un numéro de trame système, SFN, et la première partie comprend les N bits des quatre LSB du SFN qui ont été déplacés à partir de la seconde partie ;
un processeur configuré pour :
traiter la charge utile PBCH du SSB particulier afin de déterminer (806) une valeur d'un indice SSB candidat particulier, où l'indice SSB candidat particulier est l'indice candidat SSB du SSB particulier ;
traiter la charge utile PBCH du SSB particulier afin de localiser (807), dans la trame radio, le SSB particulier, la localisation comprenant :
la détermination (804) d'une valeur d'un bit de demi-trame, où la valeur du bit de demi-trame indique si une demi-trame des deux demi-trames dans lesquelles l'ensemble SSB particulier est transmis est la première demi-trame ou est la seconde demi-trame, et
la localisation (805), dans la demi-trame des deux demi-trames, du SSB particulier, la localisation du SSB particulier comprenant la détermination d'une valeur des bits SSB-L ;
et
déterminer, sur la base de la valeur du bit de demi-trame, de la valeur des bits SSB-L et de la valeur de l'indice SSB candidat particulier, une limite pour la trame radio.

8. Dispositif électronique selon la revendication 7, dans lequel le processeur est également configuré pour déterminer une valeur d'un SFN pour la trame radio selon le SSB particulier.

9. Dispositif électronique selon la revendication 8, dans lequel le processeur est également configuré pour déterminer la valeur du SFN en traitant un nombre prédéterminé de bits de charge utile PBCH représentatifs des bits les moins significatifs du SFN dans la seconde partie de la charge utile PBCH.

10. Support lisible par ordinateur stockant des instructions qui, lorsqu'elles sont exécutées par un ordinateur, amènent l'ordinateur à réaliser le procédé selon l'une quelconque des revendications 1 à 6.

11. Système de communication comprenant un dispositif électronique réalisant le procédé selon l'une quelconque des revendications 1 à 6 et un émetteur.
